(19) Europäisches Patentamt
European Patent Office
Office européen des brevets

(11) **EP 4 186 987 A1**

(12) **EUROPEAN PATENT APPLICATION**
published in accordance with Art. 153(4) EPC

(43) Date of publication:
**31.05.2023  Bulletin 2023/22**

(21) Application number: **21880232.0**

(22) Date of filing: **15.10.2021**

(51) International Patent Classification (IPC):
*C21D 8/02* (2006.01)        *C21D 9/46* (2006.01)
*C22C 38/00* (2006.01)        *C22C 38/60* (2006.01)
*B22D 11/00* (2006.01)

(52) Cooperative Patent Classification (CPC):
**B22D 11/00; C21D 8/02; C21D 9/46; C22C 38/00;
C22C 38/60;** Y02P 10/20

(86) International application number:
**PCT/JP2021/038323**

(87) International publication number:
**WO 2022/080497 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.10.2020  JP 2020174217**

(71) Applicant: **NIPPON STEEL CORPORATION
Chiyoda-ku
Tokyo 100-8071 (JP)**

(72) Inventors:
• **KUWAYAMA, Takuya**
  **Tokyo 100-8071 (JP)**
• **HAYASHI, Kunio**
  **Tokyo 100-8071 (JP)**
• **YOKOYAMA, Takafumi**
  **Tokyo 100-8071 (JP)**

(74) Representative: **Zimmermann & Partner
Patentanwälte mbB
Postfach 330 920
80069 München (DE)**

(54)    **STEEL SHEET AND METHOD FOR MANUFACTURING SAME**

(57)    This steel sheet has a predetermined chemical composition, in which a microstructure at a 1/4 depth position of a sheet thickness from a surface of the steel sheet contains, by volume fraction, ferrite: 0% to 50%, residual austenite: 6% to 30%, bainite: 5% to 60%, tempered martensite: 5% to 50%, fresh martensite: 0% to 10%, and pearlite: 0% to 5%, at the 1/4 depth position of the sheet thickness from the surface, a number proportion of the residual austenite having an aspect ratio of 2.0 or more to an entire residual austenite is 50% or more, and a number density of inclusions and precipitates having a grain size of 1 $\mu$m or more is 30 /mm$^2$ or less, and at a 1/20 depth position of the sheet thickness from the surface, an average interval between Mn-concentrated portions in a direction perpendicular to a rolling direction is 300 $\mu$m or less, and a standard deviation of Mn concentrations in the residual austenite is 0.40% or less.

EP 4 186 987 A1

**Description**

[Technical Field of the Invention]

The present disclosure relates to a steel sheet and a method for manufacturing the same.
Priority is claimed on Japanese Patent Application No. 2020-174217, filed October 15, 2020, the content of which is incorporated herein by reference.

[Related Art]

In recent years, there has been a demand for improved fuel efficiency of a vehicle from the viewpoint of regulations on greenhouse gas emissions associated with global warming countermeasures, and the application of high strength steel sheets is widened in order to reduce a weight of a vehicle body and secure collision safety. In particular, recently, there has been an increasing demand for high strength steel sheets having a tensile strength of 980 MPa or more.
High strength steel sheets used for vehicle components are required to have not only strength but also properties necessary for forming components, such as press formability. There is a trade-off relationship between strength and press formability, and transformation-induced plasticity (TRIP) steel sheets utilizing transformation induced plasticity of residual austenite are known as one achieving both.
Furthermore, collision characteristics are important when a vehicle actually runs. Regarding the collision characteristics, toughness and bendability after applying prestrain by press forming and further performing a heat treatment in a baking coating process are important.
Patent Documents 1 and 2 disclose techniques related to high strength TRIP steel sheets in which elongation and a hole expansion ratio are improved by controlling volume fractions of structures within predetermined ranges. Furthermore, Patent Document 3 discloses a technique in which, in a high strength steel sheet of 980 MPa or more, excellent hole expansibility, bendability, and embrittlement resistance at a low temperature, and a 0.2% proof stress can be obtained by causing residual austenite and bainitic ferrite to have predetermined area fractions and morphologies.
Patent Document 4 discloses a technique for improving formability of a high strength steel sheet by performing a plurality of times of annealing to reduce a proportion of stretched tempered martensite to less than 20% while a residual austenite phase is included.

[Prior Art Document]

[Patent Document]

[Patent Document 1] PCT International Publication No. WO2013/051238
[Patent Document 2] Japanese Unexamined Patent Application, First Publication No. 2006-104532
[Patent Document 3] PCT International Publication No. WO2019/186989
[Patent Document 4] Japanese Unexamined Patent Application, First Publication No. 2013-185196

[Disclosure of the Invention]

[Problems to be Solved by the Invention]

In any of the documents described above, the press formability and toughness of the manufactured steel sheet are mentioned, and there is no disclosure of a technique related to a steel sheet provided with optimized collision characteristics after a heat treatment in a baking step after press forming. In addition, martensite transformed from residual austenite by strain-induced transformation deteriorates the toughness, so that an impact absorbed energy of a member in a vehicle collision is reduced. That is, although the techniques in the related art disclose techniques for improving the toughness of the steel sheet itself, in the techniques in the related art, there is a room for improving the technique to reduce an influence of martensite after strain-induced transformation, which deteriorates collision characteristics in actual vehicles.
An object of the present disclosure is to provide a steel sheet having excellent press formability and excellent toughness even after being subjected to baking coating after being formed into a pressed component, and a method for manufacturing the same.

[Means for Solving the Problem]

The present inventors investigated a steel sheet having excellent press formability and excellent toughness even after being subjected to baking coating after being formed into a pressed component, and a method for manufacturing the same. As a result, the following findings (i) to (iii) were obtained. In addition, from the following findings (i) to (iii), it was found that a decrease in toughness due to fresh martensite generated by strain-induced transformation can be suppressed while securing an effect of achieving high-strengthening and improving formability due to a TRIP effect.

(i) A distribution state of residual austenite in a structure of a steel sheet is affected by the segregation of Mn, which is an austenite forming element. Such Mn segregation occurs mainly during a solidification process in a casting step, and is caused by element distribution in a solid-liquid coexistence region during dendrite arm growth. This solidifying segregation causes distribution of Mn concentrations in a sheet thickness direction and a sheet width direction when a slab is reheated in a hot rolling step and becomes a hot-rolled steel sheet. Mn is a representative substitutional element, and homogenization only by diffusion requires holding at a temperature as high as 1200°C or higher for 24 hours or longer. Therefore, it is difficult to make a significant improvement in an ordinary cold rolling step and an annealing step after hot rolling. Therefore, Mn segregation remains in a strip shape in a final product sheet, and residual austenite is present in a strip shape along this high Mn concentration region. Thereafter, the residual austenite becomes martensite due to strain-induced transformation in a press forming step, and this strip-like martensite causes a significant deterioration in the toughness of the component. Therefore, in order to improve the toughness of the component while achieving both high strength and excellent formability, it is necessary to improve the segregation of Mn in steps until the hot-rolled steel sheet is obtained.
(ii) It is not industrially easy to completely eliminate Mn segregation only by relieving Mn segregation at a stage prior to the hot rolling step as in (i) above. Therefore, it is necessary to further uniformly disperse the residual austenite by microstructure control in the hot rolling step and the annealing step. Typically, in a case where the microstructure control is performed by annealing after cold rolling, phase transformation during cooling from a highest heating temperature progresses unevenly. As a result, the distribution of residual austenite that remains as an untransformed region is biased toward Mn segregation portions and becomes non-uniform. This is because the application of strain to the steel sheet by cold rolling, which is usually performed when manufacturing cold-rolled steel sheets, causes the recrystallization of ferrite and the reverse transformation to austenite that occur during heating in the annealing step to be non-uniform. Contrary to this, coiling or intermediate annealing is performed to cause a microstructure before final annealing to have lath-like bainite and martensite and thereafter strain by cold rolling or the like is not applied or annealing (final annealing) is performed in a state in which the application of strain is suppressed, whereby recrystallization during heating is suppressed, and a needle-like structure derived from laths can be maintained. In addition, since bainite and martensite before final annealing have a high dislocation density, diffusion of Mn through dislocation is promoted during heating for annealing. Accordingly, the Mn concentrations in austenite are homogenized, and the Mn concentration distribution in residual austenite remaining after cooling after annealing can be homogenized.
(iii) In addition to the homogenization of residual austenite, it is also important to reduce inclusions in steel as much as possible. When an influence of inclusions on the toughness after forming into a component (after forming a component, that is, after press forming and baking coating) was examined, it was found that inclusions having a size of 1 μm or more have an adverse effect. That is, by reducing the number of inclusions of 1 μm or more, the toughness after forming the component is improved.

The present disclosure has been realized based on the above findings, and is specifically as follows.

[1] A steel sheet comprising, as a chemical composition, by mass%: C: 0.150% to 0.400%; Si: 0.01% to 2.50%; Mn: 1.50% to 3.50%; P: 0.050% or less; S: 0.0100% or less; Al: 0.001% to 1.500%; Si and Al: 0.50% to 3.00% in total; N: 0.0100% or less; O: 0.0100% or less; Ti: 0% to 0.200%; V: 0% to 1.00%; Nb: 0% to 0.100%; Cr: 0% to 2.00%; Ni: 0% to 1.00%; Cu: 0% to 1.00%; Co: 0% to 1.00%; Mo: 0% to 1.00%; W: 0% to 1.00%; B: 0% to 0.0100%; Sn: 0% to 1.00%; Sb: 0% to 1.00%; Ca: 0% to 0.0100%; Mg: 0% to 0.0100%; Ce: 0% to 0.0100%; Zr: 0% to 0.0100%; La: 0% to 0.0100%; Hf: 0% to 0.0100%; Bi: 0% to 0.0100%; REM other than Ce and La: 0% to 0.0100%; and a remainder of Fe and impurities, in which a microstructure at a 1/4 depth position of a sheet thickness from a surface of the steel sheet contains, by volume fraction, ferrite: 0% to 50%, residual austenite: 6% to 30%, bainite: 5% to 60%, tempered martensite: 5% to 50%, fresh martensite: 0% to 10%, and pearlite: 0% to 5%, at the 1/4 depth position of the sheet thickness from the surface, a number proportion of the residual austenite having an aspect ratio of 2.0 or more to an entire residual austenite is 50% or more, and a number density of inclusions and precipitates having a grain size of 1 μm or more is 30 /mm$^2$ or less, and at a 1/20 depth position of the sheet thickness from the surface, an average interval between Mn-concentrated portions in a direction perpendicular to a rolling direction is

300 μm or less, and a standard deviation of Mn concentrations in the residual austenite is 0.40% or less.

[2] In the steel sheet according to [1], a ratio of a Vickers hardness $Hv_{sur}$ at a depth position of 30 μm from the surface to a Vickers hardness [Hv] at the 1/4 depth position of the sheet thickness from the surface may satisfy Expression (1),

$$Hv_{sur}/[Hv] \leq 0.80. \qquad (1)$$

[3] The steel sheet according to [1] or [2] may further include a plating layer on the surface.

[4] A method for manufacturing the steel sheet according to [1], includes: a casting step of casting a molten steel having the chemical composition according to [1] into a slab having a thickness of 200 to 300 mm; a hot rolling step of performing hot rolling on the slab to obtain a hot-rolled steel sheet; a coiling step of coiling the hot-rolled steel sheet in a temperature range of 25°C to 680°C; a cold rolling step of performing cold rolling on the hot-rolled steel sheet after the coiling step at a rolling reduction of 20% or more to obtain a cold-rolled steel sheet; a first annealing step of performing first annealing on the cold-rolled steel sheet; a second annealing step of performing second annealing on the cold-rolled steel sheet after the first annealing step; and a soaking step of holding the cold-rolled steel sheet after the second annealing step in a temperature range of 260°C to 450°C for 10 to 1000 seconds, in which, in the casting step, a solidification rate at a depth position of 10 mm from a surface of the molten steel is set to 100 to 1000 °C/min, a molten steel casting amount per unit time is set to 2.0 to 6.0 tons/min, and cooling is performed at an average cooling rate set to 4 °C/sec or higher between a liquidus temperature and a solidus temperature of a surface layer area at a depth position of 5 mm from the surface of the molten steel, in the hot rolling step, an average heating rate of the slab between Ac1 and Ac1 + 30°C is 2 to 50 °C/min, and the hot rolling is performed after the slab is heated to 1200°C or higher for 20 minutes or longer, in the first annealing step, an average heating rate between Ac1 and Ac1 + 30°C is 0.5 °C/min or higher, holding is performed at a highest heating temperature of Ac3 to 950°C for 1 second to 1000 seconds, an average cooling rate in a temperature range up to 650°C is 1 °C/sec or higher, and a cooling stop temperature is 25°C to 450°C, and in the second annealing step, holding is performed at a highest heating temperature of Ac1 + 20°C or higher and lower than Ac3 for 1 second to 1000 seconds, and then cooling to 250°C or lower is performed.

[5] A method for manufacturing the steel sheet according to [1], includes: a casting step of casting a molten steel having the chemical composition according to [1] into a slab having a thickness of 200 to 300 mm; a hot rolling step of performing hot rolling on the slab to obtain a hot-rolled steel sheet; a coiling step of coiling the hot-rolled steel sheet in a temperature range of 25°C to 450°C; a cold rolling step of performing cold rolling on the hot-rolled steel sheet at a rolling reduction of 30% or less to obtain a cold-rolled steel sheet as necessary; a first annealing step of performing first annealing on the hot-rolled steel sheet or the cold-rolled steel sheet; and a soaking step of holding the hot-rolled steel sheet or the cold-rolled steel sheet after the first annealing step in a temperature range of 260°C to 450°C for 10 to 1000 seconds, in which, in the casting step, a solidification rate at a depth position of 10 mm from a surface of the molten steel is set to 100 to 1000 °C/min, a molten steel casting amount per unit time is set to 2.0 to 6.0 tons/min, and cooling is performed at an average cooling rate set to 4 °C/sec or higher between a liquidus temperature and a solidus temperature of a surface layer area at a depth position of 5 mm from the surface of the molten steel, in the hot rolling step, an average heating rate of the slab between Ac1 and Ac1 + 30°C is 2 to 50 °C/min, the hot rolling is performed after the slab is heated to 1200°C or higher for 20 minutes or longer, and after completing finish rolling at a temperature of 850°C or higher, cooling to 600°C is performed at an average cooling rate of 10 °C/sec or higher, and in the first annealing step, holding is performed at a highest heating temperature of Ac1 + 20°C or higher and lower than Ac3 for 1 second to 1000 seconds, and then cooling to 250°C or lower is performed.

[6] In the method for manufacturing the steel sheet according to [4], in at least one of the first annealing step and the second annealing step, when the holding at the highest heating temperature is performed for 1 second to 1000 seconds, an atmosphere $\log(PH_2O/PH_2)$ in a heating furnace may be $-1.10 \leq \log(PH_2O/PH_2) \leq -0.07$.

[7] In the method for manufacturing the steel sheet according to [5], in the first annealing step, when the holding at the highest heating temperature is performed for 1 second to 1000 seconds, an atmosphere $\log(PH_2O/PH_2)$ in a heating furnace may be $-1.10 \leq \log(PH_2O/PH_2) \leq -0.07$.

[8] The method for manufacturing the steel sheet according to [4] or [6], may further include: a hot-dip galvanizing step of immersing the cold-rolled steel sheet in a hot-dip galvanizing bath to obtain a hot-dip galvanized steel sheet during the cooling from the highest heating temperature to 250°C or lower in the second annealing step before the soaking step.

[9] The method for manufacturing the steel sheet according to [5] or [7], may further include: a hot-dip galvanizing step of immersing the hot-rolled steel sheet or the cold-rolled steel sheet in a hot-dip galvanizing bath to obtain a hot-dip galvanized steel sheet during the cooling from the highest heating temperature to 250°C or lower in the first annealing step before the soaking step.

[10] The method for manufacturing the steel sheet according to [4] or [6], may further include: a hot-dip galvanizing step of immersing the cold-rolled steel sheet after the soaking step in a hot-dip galvanizing bath to obtain a hot-dip galvanized steel sheet.

[11] The method for manufacturing the steel sheet according to [5] or [7], may further include: a hot-dip galvanizing step of immersing the hot-rolled steel sheet or the cold-rolled steel sheet after the soaking step in a hot-dip galvanizing bath to obtain a hot-dip galvanized steel sheet.

[Effects of the Invention]

According to the present disclosure, it is possible to obtain a steel sheet having excellent press formability and excellent toughness even after press forming and baking coating.

[Embodiments of the Invention]

A steel sheet according to an embodiment of the present disclosure contains, as a chemical composition, by mass%:

C: 0.150% to 0.400%;
Si: 0.01% to 2.50%;
Mn: 1.50% to 3.50%;
P: 0.050% or less;
S: 0.0100% or less;
Al: 0.001% to 1.500%;
Si and Al: 0.50% to 3.00% in total;
N: 0.0100% or less;
O: 0.0100% or less;
Ti: 0% to 0.200%;
V: 0% to 1.00%;
Nb: 0% to 0.100%;
Cr: 0% to 2.00%;
Ni: 0% to 1.00%;
Cu: 0% to 1.00%;
Co: 0% to 1.00%;
Mo: 0% to 1.00%;
W: 0% to 1.00%;
B: 0% to 0.0100%;
Sn: 0% to 1.00%;
Sb: 0% to 1.00%;
Ca: 0% to 0.0100%;
Mg: 0% to 0.0100%;
Ce: 0% to 0.0100%;
Zr: 0% to 0.0100%;
La: 0% to 0.0100%;
Hf: 0% to 0.0100%;
Bi: 0% to 0.0100%;
REM other than Ce and La: 0% to 0.0100%; and
a remainder of Fe and impurities,

in which a microstructure at a 1/4 depth position of a sheet thickness from a surface of the steel sheet contains, by volume fraction,

ferrite: 0% to 50%,
residual austenite: 6% to 30%,
bainite: 5% to 60%,
tempered martensite: 5% to 50%,
fresh martensite: 0% to 10%, and
pearlite: 0% to 5%,

at the 1/4 depth position of the sheet thickness from the surface, a number proportion of the residual austenite having an aspect ratio of 2.0 or more to the entire residual austenite is 50% or more, and a number density of inclusions and precipitates having a grain size of 1 $\mu$m or more is 30 /mm$^2$ or less, and

at a 1/20 depth position (1/20 thickness position) of the sheet thickness from the surface, an average interval between Mn-concentrated portions in a direction perpendicular to a rolling direction is 300 $\mu$m or less, and a standard deviation of Mn concentrations in the residual austenite is 0.40% or less.

"Chemical Composition"

First, the reasons for limiting the chemical composition of the steel sheet according to the embodiment of the present disclosure as described above will be described. Unless otherwise specified, all "%" used to specify the chemical composition in the present specification are "mass%".

[C: 0.150% to 0.400%]

C (carbon) is an essential element for securing the strength of the steel sheet. By setting a C content to 0.150% or more, desired high strength can be obtained. The C content may be 0.170% or more or 0.180% or more. In order to secure workability and weldability, the C content is set to 0.400% or less. The C content may be 0.380% or less, 0.340% or less, or 0.300% or less.

[Si: 0.01% to 2.50%]

Si (silicon) is an element that contributes to an improvement in strength and formability by suppressing the generation of iron carbide and leaving residual austenite. In order to obtain this effect, a Si content is set to 0.01% or more. The Si content may be 0.05% or more, 0.10% or more, or 0.12% or more. In order to secure the weldability of the steel sheet, the Si content is set to 2.50% or less. The Si content may be 2.40% or less, 2.20% or less, or 2.00% or less.

[Mn: 1.50% to 3.50%]

Mn (manganese) is a strong austenite stabilizing element, and is an effective element for high-strengthening of steel sheets. In order to obtain this effect, a Mn content is set to 1.50% or more. The Mn content may be 1.60% or more, 1.70% or more, 1.90% or more, or 2.10% or more. In order to secure weldability and low temperature toughness, the Mn content is set to 3.50% or less. The Mn content may be 3.40% or less, 3.20% or less, or 3.00% or less.

[P: 0.050% or Less]

Phosphorus (P) is a solid solution strengthening element and is an effective element for high-strengthening of steel sheets, but excessive inclusion thereof deteriorates weldability and toughness. Therefore, a P content is set to 0.050% or less. The P content is preferably 0.045% or less, 0.035% or less, or 0.020% or less. The P content is preferably as small as possible and may be 0%, but extremely reducing the P content increases the cost of removing P. Therefore, it is preferable to set the lower limit of the P content to 0.001% from the viewpoint of economy.

[S: 0.0100% or Less]

S (sulfur) is an element contained as an impurity, and is an element that forms MnS in steel and deteriorates toughness and hole expansibility. Therefore, a S content is set to 0.0100% or less as a range in which deterioration of toughness and hole expansibility is not significant. The S content is preferably 0.0050% or less, 0.0040% or less, or 0.0030% or less. The S content is preferably as small as possible and may even be 0%. However, if the S content is extremely reduced, a desulfurization cost will increase. Therefore, it is preferable to set a lower limit of the S content to 0.0001% from the viewpoint of economy.

[Al: 0.001% to 1.500%]

Al (aluminum) is an element used for deoxidation of steel, and like Si, is an effective element for suppressing the generation of iron carbide and leaving residual austenite. Therefore, the Al content is set to 0.001 % or more. The Al content may be set to 0.005% or more, 0.010% or more, 0.025% or more, 0.050% or more, or 0.100% or more. On the other hand, even if Al is contained excessively, the effect is saturated, and not only does the cost rise, but also a transformation temperature of the steel rises and a load during hot rolling increases. Therefore, the Al content is set to 1.500% or less. The Al content is preferably 1.200% or less, 1.000% or less, or 0.800% or less.

[Si and Al: 0.50% to 3.00% or Less in Total]

Si and Al are useful elements for industrially manufacturing TRIP steel sheets. By including Si and/or Al, the generation of iron carbide in austenite with an increased C concentration is suppressed, and residual austenite that is stable even at room temperature can be obtained. In order to obtain this effect, the total amount of Si and Al needs to be 0.50% or more, with the Si content and Al content within the above ranges. The total amount of Si and Al is preferably 0.80% or more, and more preferably 1.20% or more. On the other hand, Si and Al that are excessively included deteriorate other properties such as castability during casting and weldability. Therefore, the total amount of Si and Al is set to 3.00% or less. The total amount of Si and Al is preferably 2.80% or less, more preferably 2.50% or less, and still more preferably 2.00% or less.

[N: 0.0100% or Less]

N (nitrogen) is an element contained as an impurity, and when a N content exceeds 0.0100%, N forms coarse nitrides in steel and deteriorates bendability and hole expansibility. Therefore, the N content is set to 0.0100% or less. The N content is preferably 0.0080% or less, 0.0060% or less, or 0.0050% or less. The N content is preferably as small as possible and may even be 0%. However, if the N content is extremely reduced, a denitrification cost will increase. Therefore, it is preferable to set a lower limit of the N content to 0.0001 % from the viewpoint of economy.

[O: 0.0100% or Less]

O (oxygen) is an element contained as an impurity, and when an O content exceeds 0.0100%, O forms coarse oxides in steel and deteriorates the bendability and hole expansibility. Therefore, the O content is set to 0.0100% or less. The O content is preferably 0.0080% or less, 0.0060% or less, or 0.0050% or less. The O content is preferably as small as possible and may even be 0%. However, a lower limit of the O content is preferably 0.0001 % from the viewpoint of manufacturing costs.

Basic elements contained in the steel sheet according to the embodiment of the present disclosure are as described above. That is, the steel sheet according to the embodiment of the present disclosure basically contains the above elements and the remainder consisting of Fe and impurities as the chemical composition. Here, the impurities are components that are incorporated in due to various factors in a manufacturing process, including raw materials such as ores and scraps, when industrially manufacturing the steel sheet, and include those that are not intentionally added to the steel sheet according to the present embodiment of the present disclosure.

On the other hand, in order to improve various properties, the steel sheet may further contain the following elements (optional elements) instead of a part of Fe, as necessary. Since these elements do not necessarily have to be contained, lower limits thereof are 0%.

[Ti: 0% to 0.200%, V: 0% to 1.00%, Nb: 0% to 0.100%, Cr: 0% to 2.00%, Ni: 0% to 1.00%, Cu: 0% to 1.00%, Co: 0% to 1.00%, Mo: 0% to 1.00%, W: 0% to 1.00%, B: 0% to 0.0100%, Sn: 0% to 1.00%, and Sb: 0% to 1.00%]

Ti (titanium), V (vanadium), Nb (niobium), Cr (chromium), Ni (nickel), Cu (copper), Co (cobalt), Mo (molybdenum), W (tungsten), B (boron), Sn (tin), and Sb (antimony) are all effective elements for the high-strengthening of steel sheets. Therefore, one or more of these elements may be contained, as necessary. However, excessive inclusion of these elements saturates the effect, unnecessarily leading to an increase in cost. Therefore, the amounts thereof are respectively set to Ti: 0% to 0.200%, V: 0% to 1.00%, Nb: 0% to 0.100%, Cr: 0% to 2.00%, Ni : 0% to 1.00%, Cu: 0% to 1.00%, Co: 0% to 1.00%, Mo: 0% to 1.00%, W: 0% to 1.00%, B : 0% to 0.0100%, Sn: 0% to 1.00%, and Sb: 0% to 1.00%. In order to obtain a sufficient effect, the amount of each element may be 0.005% or more or 0.010% or more. In particular, the B content may be 0.0001% or more or 0.0005% or more.

[Ca: 0% to 0.0100%, Mg: 0% to 0.0100%, Ce: 0% to 0.0100%, Zr: 0% to 0.0100%, La: 0% to 0.0100%, Hf: 0% to 0.0100%, Bi: 0% to 0.0100%, and REM Other Than Ce and La: 0% to 0.0100%]

Ca (calcium), Mg (magnesium), Ce (cerium), Zr (zirconium), La (lanthanum), Hf (hafnium), and REMs (rare earth elements) other than Ce and La are elements that contribute to fine dispersion of inclusions in steel, and Bi (bismuth) is an element that reduces microsegregation of a substitutional alloying element such as Mn and Si in steel. Since each of these elements contributes to an improvement in the workability of the steel sheet, one or more of these elements may be contained as necessary. However, excessive inclusion thereof causes deterioration of ductility. Therefore, the amount of each of the elements is set to 0.0100% or less. Moreover, in order to obtain sufficient effects, the amount of each of the elements may be 0.0005% or more or 0.0010% or more.

In the steel sheet according to the embodiment of the present disclosure, the remainder other than the above elements consists of Fe and impurities. That is, the chemical composition of the steel sheet according to the embodiment of the present disclosure contains the basic elements and the remainder consisting of Fe and impurities, or contains the basic elements, one or more of the optional elements, and the remainder consisting of Fe and impurities.

"Microstructure of Inside of Steel Sheet"

Next, an internal structure (microstructure) of the steel sheet according to the embodiment of the present disclosure will be described.

In the steel sheet according to the embodiment of the present disclosure, the microstructure at the 1/4 depth position (1/4 thickness position) of the sheet thickness from the surface is specified. In the present embodiment, a range from a position at a 1/8 depth (1/8 thickness) of the sheet thickness from the surface to a position at a 3/8 depth (3/8 thickness) of the sheet thickness from the surface, centered on the 1/4 depth position (1/4 thickness position) of the sheet thickness from the surface, is regarded as the 1/4 depth position (1/4 thickness position) of the sheet thickness from the surface.

[Ferrite: 0% to 50%]

Ferrite is a soft structure with excellent ductility. In order to improve elongation of the steel sheet, ferrite may be contained according to the required strength or ductility. However, excessive inclusion of ferrite causes a difficulty in securing desired steel sheet strength. Therefore, the volume fraction of ferrite is set to 50% or less. The volume fraction of ferrite may be 45% or less, 40% or less, or 35% or less. The volume fraction of ferrite may be 0%, for example, 3% or more, 5% or more, or 10% or more.

[Residual Austenite: 6% to 30%]

Residual austenite is a structure that improves the ductility of a steel sheet by a TRIP effect in which residual austenite transforms into martensite due to strain-induced transformation during deformation of the steel sheet. Therefore, the volume fraction of residual austenite is set to 6% or more. The volume fraction of residual austenite may be set to 8% or more or 10% or more. The higher the volume fraction of residual austenite, the higher the elongation of the steel sheet. However, in order to obtain a large amount of residual austenite, it is necessary to include a large amount of alloying elements such as C. Therefore, the volume fraction of residual austenite is set to 30% or less. The volume fraction of residual austenite may be 25% or less or 20% or less.

[Bainite: 5% to 60%]

In the present embodiment, bainitic transformation is caused to partially progress before martensitic transformation in order to suppress the generation of coarse tempered martensite. Therefore, the volume fraction of bainite is set to 5% or more. The volume fraction of bainite may be 8% or more, 12% or more, 13% or more, or 15% or more. The volume fraction of bainite is set to 60% or less in order to appropriately secure the balance between strength and ductility. The volume fraction of bainite may be 50% or less, 40% or less, or 35% or less.

[Tempered Martensite: 5% to 50%]

Tempered martensite is a structure that has high strength and is tough. The volume fraction of tempered martensite is set to 5% or more in order to balance strength, ductility, and hole expansibility at a high level. The volume fraction of tempered martensite may be 10% or more, 15% or more, or 20% or more. In order to ensure a suitable balance between strength and ductility, the volume fraction of tempered martensite is set to 50% or less. The volume fraction of tempered martensite may be 45% or less, 40% or less, or 30% or less.

[Fresh Martensite: 0% to 10%]

In the present embodiment, fresh martensite refers to untempered martensite (martensite that does not contain carbide). Since fresh martensite is a brittle structure, fresh martensite becomes a fracture origin during plastic deformation and deteriorates local ductility of the steel sheet. Therefore, the volume fraction of fresh martensite is set to 10% or less. The volume fraction of fresh martensite is preferably 8% or less or 5% or less. From the viewpoint of suppressing the deterioration of the local ductility, the volume fraction of fresh martensite is ideally 0%. However, the volume fraction of fresh martensite may be 1% or more or 2% or more.

[Pearlite: 0% to 5%]

pearlite is a structure that contains hard and coarse cementite, becomes a fracture origin during plastic deformation, and thus deteriorate the local ductility of the steel sheet. Therefore, the volume fraction of pearlite is set to 5% or less. The volume fraction of pearlite is preferably 3% or less or 2% or less. From the viewpoint of suppressing the deterioration of the local ductility, the volume fraction of pearlite may be 0%.

[At 1/4 Depth Position of Sheet Thickness from Surface of Steel Sheet, Number Proportion of Residual Austenite Having Aspect Ratio of 2.0 or More to Entire Residual Austenite Is 50% or More]

Residual austenite transforms into martensite by strain-induced transformation during forming. When residual austenite transforms into martensite, in a case where this strain-induced martensite is adjacent to soft ferrite, bainite, and tempered martensite, a large difference in hardness occurs therebetween. Such a large difference in hardness causes cracks to occur at an early stage of deformation in a case of being subjected to forming such as hole expansion or stretch flange forming. In TRIP steel containing residual austenite, such a difference in hardness is unavoidable. However, continuous crack propagation can be suppressed by controlling a dispersion state thereof.

In a case where residual austenite has an aspect ratio of 2.0 or more, residual austenite has a lath-like morphology. Since residual austenite is an untransformed region after annealing, in the case where residual austenite is lath-like, the adjacent soft ferrite, bainite, and tempered martensite also have a lath-like morphology. Since such a lath-like structural morphology is less likely to be affected by Mn segregation, a strip-like distribution of residual austenite is less likely to be achieved. In a case where the volume fraction of residual austenite having an aspect ratio of less than 2.0 is 50% or more, a volume fraction of the lath-like structure becomes insufficient, and sufficient toughness cannot be obtained after press forming. Therefore, the number proportion of residual austenite having a lath-like morphology having an aspect ratio of 2.0 or more is set to 50% or more, and preferably 60% or more, with respect to the total number of residual austenite.

Here, the aspect ratio of residual austenite is a value obtained by dividing a length of a major axis of an equivalent ellipse of a grain of the residual austenite by a length of a minor axis. The equivalent ellipse is an ellipse having the same area as the grain of the residual austenite and a maximum length L2 of the grain of the residual austenite as the length of the major axis. Even if the grain of the residual austenite has a complex shape, the aspect ratio (L2/L1) of the grain of the residual austenite can be obtained from a length L1 of the minor axis and the length L2 of the major axis of the equivalent ellipse.

[Number Density of Inclusions and Precipitates Having Grain Size of 1 $\mu$m or More at 1/4 Depth Position of Sheet Thickness from Surface of Steel Sheet Is 30 /mm$^2$ or Less]

The number density of inclusions and precipitates having a grain size of 1 $\mu$m or more present in the steel sheet is set to 30 /mm$^2$ or less. Here, the grain size of inclusions and precipitates is a circle equivalent diameter converted from an area of inclusions and precipitates. The inclusions are Al-based or Ti-based oxides, and a representative example thereof is Al$_2$O$_3$. In addition, the precipitates are Ti-based or Al-based precipitates, and representative examples that have a large size among the precipitates include nitrides such as TiN and AlN. In particular, TiN is generated at a high temperature and coarsened. Since these inclusions and precipitates are both hard, when a large number of coarse inclusions and precipitates having a grain size of 1 $\mu$m or more are present in the steel sheet, toughness of components deteriorates in a collision of a vehicle. Therefore, the number density of inclusions and precipitates having a grain size of 1 $\mu$m or more present in the steel sheet is set to 30 /mm$^2$ or less. Among the inclusions and precipitates, those having a grain size of less than 1 $\mu$m have little effect on toughness of components after press forming and are thus not particularly limited.

[At 1/20 Depth Position of Sheet Thickness from Surface, Average Interval between Mn-Concentrated Portions in Direction Perpendicular to Rolling Direction Is 300 $\mu$m or Less]

At the 1/20 depth position of the sheet thickness from the surface, the average interval between Mn-concentrated portions in the direction perpendicular to the rolling direction (sheet width direction) is set to 300 $\mu$m or less. Solidifying segregation corresponding to a primary dendrite arm spacing during solidification appears in the sheet width direction, but by controlling this solidification, the primary dendrite arm spacing is refined, and the average interval between the Mn-concentrated portions is controlled to 300 $\mu$m or less. When the control of solidification is insufficient and the primary dendrite arm spacing in a slab is widened, Mn is not sufficiently diffused during cooling of the slab and heating in a hot rolling step, Mn-concentrated portions remain, and the average interval between the Mn-concentrated portions becomes greater than 300 $\mu$m.

When the average interval between the Mn-concentrated portions exceeds 300 $\mu$m, it becomes difficult to suppress toughness deterioration.

Here, the 1/20 depth position of the sheet thickness from the surface means a range from a position at a 1/40 depth (1/40 thickness) of the sheet thickness from the surface to a position at a 3/40 depth (3/40 thickness) of the sheet thickness from the surface.

A lower limit of the average interval between the Mn-concentrated portions is not limited. However, it is not easy to set the average interval between the Mn-concentrated portions to less than 100 $\mu$m, so that the lower limit thereof may be set to 100 $\mu$m or more.

[Standard Deviation of Mn Concentrations in Residual Austenite at 1/20 Depth Position of Sheet Thickness from Surface Is 0.40% or Less]

By setting the standard deviation of the Mn concentrations in residual austenite by mass% (hereinafter, sometimes simply referred to as the standard deviation of the Mn concentrations) to 0.40% or less, the toughness in a vehicle collision can be improved. In a case where the standard deviation of the Mn concentrations in residual austenite is large (large unevenness), the residual austenite is divided into a region having a low Mn concentration where strain-induced transformation is likely to occur (because Mn is an austenite former) and a region having a high Mn concentration where strain-induced transformation is less likely to occur, so that a difference in hardness occurs in a vehicle collision, resulting in a decrease in toughness.

[Ratio of Vickers Hardness $Hv_{sur}$ at Depth Position of 30 $\mu$m from Surface to Vickers Hardness [Hv] at 1/4 Depth Position of Sheet Thickness from Surface Satisfies $Hv_{sur}/[Hv] \leq 0.80$]

Regarding at least one surface, preferably any one of one surface and the other surface facing each other (that is, front and rear surfaces), by causing a hardness at a position of 30 $\mu$m from the surface of the steel sheet in a sheet thickness direction to be softer than a hardness at a 1/4 position from the surface in the sheet thickness direction, absorption energy can be further increased in a collision of a vehicle, which is preferable. In particular, a high strength steel sheet having a tensile strength of 980 MPa or more may not withstand strain imparted to a surface layer of the steel sheet in a collision of a component, and may fracture early. Therefore, softening of the surface layer of the steel sheet is effective for suppressing fracture due to strain in the surface layer of the steel sheet. Since the Vickers hardness is measured by measuring an indentation generated on the steel sheet by a load of an indenter, the hardness at a position of 30 $\mu$m from the surface where a technically stable surface layer hardness can be obtained is specified as a surface layer hardness $Hv_{sur}$. In addition, since the ratio to a representative hardness in the steel sheet is important, by causing the ratio to the hardness [Hv] at the 1/4 depth position of the sheet thickness from the surface to 0.80 or less, an improvement in the bendability is obtained, and collision performance of a vehicle component is further improved.

[Having Plating Layer on Surface]

The steel sheet may have a plating layer on the surface of the steel sheet. In a case where corrosion resistance is required depending on an environment in which steel is used, there is no problem even if, for example, at least one surface, preferably both surfaces, contains a zinc-based plating layer (containing 50 mass% or more of zinc). The plating layer may be a hot-dip galvanized layer or a hot-dip galvannealed layer having any composition known to those skilled in the art, and may contain elements such as Al in addition to Zn. Also, an adhesion amount of the plating layer is not particularly limited, and may be a general adhesion amount.

The fractions of microstructure of the steel sheet, the aspect ratio of residual austenite, and the number density of inclusions and coarse precipitates are evaluated by a SEM-EBSD method (electron backscatter diffraction method), a SEM secondary electron imaging, and an X-ray diffraction method.

First, a sample of a sheet thickness cross section parallel to the rolling direction of the steel sheet is collected as an observed section, the observed section is mechanically polished to a mirror finish, and is then subjected to electrolytic polishing. Next, in an observation visual field in a range from the 1/8 thickness to the 3/8 thickness centered on the 1/4 thickness from the surface of a base steel sheet in the observed section, crystal structure and orientation analysis is performed on a total area of $2.0 \times 10^{-9}$ m$^2$ or more by the SEM-EBSD method at a magnification of 3000-fold. For the analysis of data obtained by the EBSD method, Ver. 6.0 or higher of "OIM Analysys" manufactured by TSL is used. A step size (step) is set to 0.03 to 0.20 $\mu$m. A region determined to be FCC iron from observation results is defined as residual austenite, and an area fraction of residual austenite is obtained. This area fraction is regarded as the volume fraction. Furthermore, a grain boundary map is obtained with a boundary having a crystal orientation difference of 15 degrees or more as a grain boundary. A minor axis, a major axis, and a circle equivalent diameter of the residual austenite obtained by this grain boundary map can be measured using OIM Analysis, and from the measurement results, an aspect ratio of the residual austenite is determined.

Next, nital etching is performed on the same sample as in the EBSD observation, and secondary electron imaging is performed on the same visual field as in the EBSD observation. In order to observe the same visual field as in the EBSD measurement, a mark such as a Vickers indentation may be provided in advance. From an obtained secondary electron image, "ferrite", "bainite", "tempered martensite", "fresh martensite and/or residual austenite", and "pearlite" are distinguished, an area fraction of each is measured, and the obtained area fraction is regarded as a volume fraction.

When the structures are distinguished, a region having an intragranular substructure and in which precipitated cementite have multiple variants is determined to be tempered martensite. A region where cementite is precipitated in a lamellar form is determined to be pearlite. A region having a relatively low brightness in the remainder and having no substructure confirmed is determined to be ferrite. A region where a brightness is high and a substructure is not revealed by etching is determined to be fresh martensite or residual austenite. A region that does not correspond to any of the above regions is determined to be bainite. The volume fraction of each structure is obtained by calculating the area fraction of each structure by a point counting method. The volume fraction of fresh martensite can be obtained by subtracting the area fraction of residual austenite obtained by the above-described measurement from the area of the region where the substructure is not revealed by etching.

Measurement of the number density of inclusions and coarse precipitates is performed by observing the secondary electron image. During the observation, a visual field area of $2.0 \times 10^{-9}$ m$^2$ or more is observed at a magnification of 3000-fold, and n=20 visual fields are observed for each manufacturing condition. Regarding the grain size, an area of each of the inclusions and precipitates obtained by the image analysis is converted into a circle equivalent grain size, and a diameter thereof is taken as the grain size of each of the inclusions and precipitates. The number of inclusions and precipitates having a grain size of 1 $\mu$m or more is counted, and the number per unit area (number density) is converted.

EPMA is used to measure the average interval between the Mn-concentrated portions and the standard deviation of the Mn concentrations in residual austenite.

A rolled surface of the steel sheet is ground and buffed to prepare a sample for analysis that reveals an analysis surface at a 1/20 depth position of the sheet thickness from the surface, and a Mn distribution is examined by EPMA. Since it is necessary to measure the average interval between the Mn-concentrated portions in a relatively wide range, line segments of 8 mm in the direction (sheet width direction) perpendicular to the rolling direction are continuously measured at intervals of 1 $\mu$m. A concentration at each measurement point is obtained by performing 1 $\mu$m point measurement on a line segment of 500 $\mu$m from each measurement point in the rolling direction and obtaining an average value thereof. Assuming that an average value and a maximum of Mn concentrations in all the measurement points of 8 mm in the sheet width direction are Mnave and Mnmax, respectively, a region having a Mn concentration of (Mnave + Mnmax)/2 or more is taken as a Mn-concentrated portion, and an average interval between the Mn-concentrated portions is obtained. In addition, a Si concentration is also measured at each measurement point, a Mn concentration of a region having a lower Si concentration than an average Si concentration of the steel sheet is regarded as a Mn concentration in residual austenite, and a standard deviation thereof is obtained.

[Mechanical Properties]

Assuming that the steel sheet according to the embodiment of the present disclosure is used as a steel sheet for a vehicle, as mechanical properties, the steel sheet preferably has a TS of 980 MPa or more and a TS $\times$ El $\times$ $\lambda^{0.5}$/1000 of 80 or more.

A tensile strength(TS) and a total elongation (El) are measured by taking a JIS No. 5 tensile test piece from the direction perpendicular to the rolling direction, and performing a tensile test according to JIS Z2241 (2011) with a gauge length of 50 mm and a tension speed of 10 mm/min.

In addition, a hole expansion ratio ($\lambda$) is measured by performing a hole expanding test according to "JFS T 1001 Method of hole expanding test" with a punch diameter of 10 mm, a punching clearance of 12%, and a punch shape of a conical punch with a 60° tip end portion.

[Sheet Thickness]

The sheet thickness of the steel sheet according to the embodiment of the present disclosure is not limited, but is, for example, 0.1 to 30 mm.

"Method for Manufacturing Steel Sheet"

Next, a method for manufacturing the steel sheet according to the embodiment of the present disclosure will be described.

The method for manufacturing the steel sheet according to the embodiment of the present disclosure can be roughly classified into two methods, a manufacturing method shown in (4) and a manufacturing method shown in (5) below.

(4) The method for manufacturing the steel sheet including:

a casting step of casting molten steel having the above chemical composition into a slab having a thickness of 200 to 300 mm;

a hot rolling step of performing hot rolling on the slab to obtain a hot-rolled steel sheet;

a coiling step of coiling the hot-rolled steel sheet in a temperature range of 25°C to 680°C;

a cold rolling step of performing cold rolling on the hot-rolled steel sheet after the coiling step at a rolling reduction of 20% or more to obtain a cold-rolled steel sheet;

a first annealing step of performing first annealing on the cold-rolled steel sheet;

a second annealing step of performing second annealing on the cold-rolled steel sheet after the first annealing step; and

a soaking step of holding the cold-rolled steel sheet after the second annealing step in a temperature range of 260°C to 450°C for 10 to 1000 seconds.

(5) The method for manufacturing the steel sheet including:

a casting step of casting molten steel having the above chemical composition into a slab having a thickness of 200 to 300 mm;

a hot rolling step of performing hot rolling on the slab at a finishing temperature of 850°C or higher to obtain a hot-rolled steel sheet;

a coiling step of coiling the hot-rolled steel sheet in a temperature range of 25°C to 450°C;

a cold rolling step of performing cold rolling on the hot-rolled steel sheet at a rolling reduction of 30% or less to obtain a cold-rolled steel sheet, as necessary;

a first annealing step of performing first annealing on the hot-rolled steel sheet or the cold-rolled steel sheet; and

a soaking step of holding the hot-rolled steel sheet after the first annealing step in a temperature range of 260°C to 450°C for 10 to 1000 seconds.

<Casting Step>

First, details of the casting step will be described.

In both the manufacturing methods (4) and (5), a step of manufacturing a slab by casting is common, in which the molten steel having the above chemical composition is melted by a known melting method such as a converter or an electric furnace and is cast into a slab having a thickness of 200 mm to 300 mm by setting a solidification rate at a depth position of 10 mm from a surface of the molten steel to 100 to 1000 °C/min, a molten steel casting amount per unit time to 2.0 to 6.0 tons/min, and an average cooling rate between a liquidus temperature and a solidus temperature of the surface layer area at a depth position of 5 mm from the surface of the molten steel to 4 °C/sec or higher for cooling.

Although a casting method is not limited, continuous casting is preferable from the viewpoint of productivity and the like.

[Solidification Rate: 100 °C/min to 1000 °C/min]

The solidification rate at a depth position of 10 mm from the surface of the molten steel in the casting step is set to 100 °C/min to 1000 °C/min. When the solidification rate is less than 100 °C/min, it becomes difficult to set a primary dendrite arm spacing at a 1/20 depth position of a slab thickness from a surface of the slab to 300 μm or less, and there may be a case where the bendability of the steel sheet cannot be improved or a case where the standard deviation of the Mn concentrations cannot be 0.40% or less. When the standard deviation of the Mn concentrations exceeds 0.40%, a proportion of regions having a relatively low Mn concentration in steel increases, and there may be cases where bainitic transformation cannot be suppressed, for example, in a cooling process of the annealing step performed on the cold-rolled steel sheet. On the other hand, when the solidification rate exceeds 1000 °C/min, there may be cases where surface cracking of the slab is incurred.

[Molten Steel Casting Amount per Unit Time: 2.0 to 6.0 tons/min]

When the molten steel casting amount per unit time is less than 2.0 tons/min, the amount of heat supplied to a mold is reduced, and a nail length of a solidification shell upper portion becomes longer, so that mold powder tends to be trapped on a slab surface layer. As a result, there may be cases where the number density of inclusions and precipitates having a grain size of 1 $\mu$m or more present on the surface of the steel sheet exceeds 30 /mm$^2$. Therefore, the molten steel casting amount per unit time is set to 2.0 tons/min or more. Mold powder is generally made up of a component system of $Al_2O_3$, SiOz, and CaO. On the other hand, when the molten steel casting amount per unit time exceeds 6.0 tons/min, the molten steel flows too fast, and alumina-based inclusions tend to be trapped on the surface layer of the slab due to entrainment of the mold powder. As a result, there may be cases where the number density of inclusions and precipitates having a grain size of 1 $\mu$m or more present on the surface of the steel sheet exceeds 30 /mm$^2$. Therefore, the molten steel casting amount per unit time is set to 6.0 tons/min or less.

[Average Cooling Rate between Liquidus Temperature and Solidus Temperature of Surface Layer Area at Depth Position of 5 mm from Surface of Molten Steel Is 4 °C/sec or Higher]

Since a period between the liquidus temperature and the solidus temperature is an intermediate process of solidification, Ti, Al, N, and the like segregate in the molten steel, and precipitation of TiN and AlN starts and TiN and AlN grow at a solidification interface thereof. Therefore, when the average cooling rate between the liquidus temperature and the solidus temperature of the surface layer area at a depth position of 5 mm from the surface of the slab is lower than 4 °C/sec, molten steel segregation occurs due to the low cooling rate, so that the generation of precipitation nuclei is promoted and grain growth of precipitates after the precipitation is also promoted. As a result, there may be cases where the number density of inclusions and precipitates having a grain size of 1 $\mu$m or more present on the surface of the steel sheet exceeds 30 /mm$^2$. Therefore, the average cooling rate between the liquidus temperature and the solidus temperature of the surface layer area at a depth position of 5 mm from the surface of the slab is set to 4 °C/sec or higher. From the viewpoint of suppressing the generation of precipitates on the surface of the steel sheet, it is preferable that the average cooling rate is as high as possible, so that it is not necessary to specify an upper limit of the average cooling rate. However, when the cooling rate is excessively high, there is a possibility of cracking in the slab. Therefore, it is preferable to set the average cooling rate to 100 °C/sec or lower.

[Slab Thickness: 200 mm to 300 mm]

The slab thickness is set to 200 mm to 300 mm. When the slab thickness is less than 200 mm, it becomes difficult to obtain the desired structure. On the other hand, when the slab thickness exceeds 300 mm, it becomes difficult to cause the average interval in the direction perpendicular to the rolling direction of the Mn-concentrated portions extended in the rolling direction to be 300 $\mu$m or less at the 1/20 depth position of the sheet thickness from the surface of the steel sheet. Moreover, when the slab thickness exceeds 300 mm, the temperature difference between the surface and the inside becomes large during heating, and the predetermined structure cannot be obtained at the position of 1/4 thickness in the steel sheet.

<Hot Rolling Step>

Next, details of the hot rolling step will be described. In both the manufacturing methods (4) and (5), conditions before finish rolling in the hot rolling step are common, and the slab having the above chemical composition is heated before hot rolling.

[Average Heating Rate between Ac1 and Ac1 + 30°C: 2 to 50 °C/min]

In the present method, an average heating rate of the slab between Ac 1 and Ac1 + 30°C during heating of the slab prior to the hot rolling is controlled to 2 to 50 °C/min. In a two-phase (austenite and ferrite) temperature range immediately above Ac1, distribution of alloying elements is particularly likely to progress between austenite and ferrite. Therefore, when the slab is reheated, the slab is heated in above temperature range at a relatively high average heating rate of 2 °C/min or higher. This is because when the average heating rate is lower than 2 °C/min, Mn is distributed between austenite and ferrite during heating, and it becomes difficult to set the standard deviation of the Mn concentrations to 0.40% or less. For example, the average heating rate may be 4 °C/min or higher.
On the other hand, in a case where rapid heating is performed at an average heating rate of higher than 50 °C/min, temperature distribution in a thickness direction of the slab becomes uneven, resulting in thermal stress. In this case, problems such as thermal deformation of the slab may occur. For example, the average heating rate may be 40 °C/min or lower, 30 °C/min or lower, 20 °C/min or lower, or 10 °C/min or lower.

The Ac1 point is calculated by the following formula. Into an element symbol in the following formula, the mass% of the corresponding element is substituted. 0 mass% is substituted into the elements not contained.

$$\text{Ac1 (°C)} = 723 - 10.7 \times \text{Mn} - 16.9 \times \text{Ni} + 29.1 \times \text{Si} + 16.9 \times \text{Cr}$$

[Slab Is Heated at 1200°C or Higher for 20 Minutes or Longer]

Long-term holding at a high temperature is effective for alleviating Mn segregation. Since Mn is a substitutional element, a diffusion rate of Mn is very slow, and diffusion progresses only when heated to a temperature as high as 1200°C or higher. By heating to 1200°C or higher and holding in the temperature range for 20 minutes or longer, the standard deviation of the Mn concentrations is reduced and can reach 0.40% or less.

[Rough Rolling]

In the present method, for example, the heated slab is subjected to rough rolling before finish rolling in order to adjust the sheet thickness or the like. Such rough rolling is not particularly limited, but is preferably performed so that a total rolling reduction at 1050°C or higher is 60% or more. When the total rolling reduction is less than 60%, recrystallization during hot rolling becomes insufficient, which may lead to heterogeneity in the structure of the hot-rolled steel sheet. The total rolling reduction may be, for example, 90% or less.

Manufacturing conditions after the finish rolling in the hot rolling step and after the hot rolling step differ between (4) and (5) above. For this reason, details will be described starting with the manufacturing conditions of (4) above.

[Finish Rolling using Plurality of Rolling Stands]

The conditions for the finish rolling are not particularly limited. However, in a facility configuration consisting of a plurality of rolling mills generally used by those skilled in the art, rolling may be performed so that a final pass outlet side temperature (finishing temperature) is in an austenite region of 800°C or higher.

<Coiling Step>

[Coiling Hot-Rolled Steel Sheet in Temperature Range of 25 to 680°C]

A coiling temperature is set to 25°C to 680°C. Even in a case of water cooling, it is practically difficult to lower the temperature to 25°C, which is the room temperature, or lower, so that the lower limit is set to 25°C. However, depending on the chemical composition, the strength of the hot-rolled steel sheet may become excessively high, and there may be cases where cold rolling properties are impaired. Therefore, the coiling temperature may be selected according to the selection of the chemical composition and a capacity of a subsequent cold rolling mill. The coiling temperature may be 400°C or higher or 500°C or higher. On the other hand, by setting the coiling temperature to 680°C or lower, ferritic transformation and the distribution of alloying elements (especially Mn) between ferrite and austenite can be suppressed. The coiling temperature may be 650°C or lower or 600°C or lower.

<Cold Rolling Step>

[Cold Rolling Is Performed on Hot-Rolled Steel Sheet at Rolling Reduction (Cold Rolling Ratio) of 20% or More]

In the present method, the hot-rolled steel sheet is subjected to cold rolling. The rolling reduction (cold rolling ratio) (cumulative rolling reduction) may be set to 25% or more or 30% or more. On the other hand, excessive reduction results in an excessive rolling load and an increase in the load on the cold rolling mill. Therefore, the rolling reduction may be set to 75% or less or 70% or less.

As necessary, pickling may be performed under known conditions before the cold rolling.

<First Annealing Step>

[First Annealing Is Performed on Cold-Rolled Steel Sheet]

In the first annealing step, the cold-rolled steel sheet is heated to a temperature of Ac3 (°C) or higher, which is a single austenite phase, so that a lath-like structure primarily containing bainite or martensite is formed after the cooling. Here, it is necessary to suppress the generation of ferrite and pearlite caused by diffusion transformation.

Specifically, an average heating rate between Ac1 to Ac1 + 30°C is set to 0.5 °C/sec or higher, holding is performed at a highest heating temperature of Ac3 to 950°C for 1 second to 1000 seconds, and cooling is performed so that an average cooling rate in a temperature range up to 650°C is 1.0 °C/sec or higher and a cooling stop temperature is 25°C to 450°C.

During heating of the steel sheet, an average heating rate between 600°C and Ac1 (°C) is not particularly limited, but is preferably limited to, for example, 10.0 °C/sec or lower. When the average heating rate exceeds 10.0 °C/second, there may be cases where recrystallization of ferrite does not progress sufficiently and the elongation of the steel sheet deteriorates. This average heating rate may be 6.0 °C/sec or lower. Moreover, a lower limit of the average heating rate is not particularly limited, but the average heating rate may be, for example, 1.0 °C/sec or more.

[Average Heating Rate between Ac1 to Ac1 + 30°C Is 0.5 °C/sec or Higher]

The average heating rate between Ac1 and Ac 1 + 30°C during heating of the steel sheet is set to 0.5 °C/sec or higher. When the average heating rate between Ac1 and Ac1 + 30°C is lower than 0.5 °C/sec, the distribution of Mn between ferrite and austenite becomes apparent, resulting in an increase in the amount of coarse fresh martensite in the final structure after plastic strain. This average heating rate may be 1.0 °C/sec or higher. An upper limit of the average heating rate is not particularly limited, but the average heating rate may be, for example, 10.0 °C/sec or lower.

[Holding at Highest Heating Temperature of Ac 3 to 950°C for 1 Second to 1000 Seconds]

In order to cause austenitizing to sufficiently progress, the steel sheet is heated to at least Ac3 (°C) or higher, and is subjected to soaking at the temperature (highest heating temperature). However, when the heating temperature is excessively high, not only is deterioration of toughness caused due to coarsening of austenite grain sizes, but also damage to an annealing facility is incurred. Therefore, the highest heating temperature is preferably set to 950°C or lower, and preferably 900°C or lower. When a soaking time is short, austenitizing does not progress sufficiently. Therefore, the soaking time is set to at least 1 second or longer. The soaking time is preferably 30 seconds or longer or 60 seconds or longer. On the other hand, too long soaking time impairs productivity. Therefore, the soaking time is set to 1000 seconds or shorter, and preferably 500 seconds or shorter. It is not always necessary to keep the steel sheet at a constant temperature during soaking, and the temperature may fluctuation within a range in which the above conditions are satisfied.

[Average Cooling Rate in Temperature Range up to 650°C Is 1.0 °C/sec or Higher and Cooling Stop Temperature Is 25 to 450°C]

After the holding at the highest heating temperature, cooling is performed. When ferritic transformation starts during cooling from the highest heating temperature, properties deteriorate significantly. Therefore, the average cooling rate from the highest heating temperature to 650°C, at which ferritic transformation tends to occur, is set to 1.0 °C/sec or higher. The average cooling rate may be 5.0 °C/sec or higher or 20.0 °C/sec or higher.

The cooling stop temperature is set to be in a range of 25°C to 450°C in order to cause the structure of the steel sheet after the first annealing step to be a structure containing bainite or martensite as a primary phase.

<Second Annealing Step>

[Second Annealing Is Performed on Cold-Rolled Steel Sheet after First Annealing Step]

In the second annealing step, after the lath-like structure primarily containing bainite or martensite is formed in the first annealing step, reheating is performed and thereafter cooling to 250°C or lower is performed.

[Holding at Highest Heating Temperature of Ac1 + 20°C or Higher and Lower Than Ac3 (°C) Is Performed for 1 Second to 1000 Seconds and thereafter Cooling to 250°C or Lower Is Performed]

The microstructure of the steel sheet after the first annealing step primarily contains bainite and martensite. Therefore, in the second annealing step, reheating to a highest heating temperature of Ac1 + 20°C or higher and lower than Ac3 (°C) is performed, and holding in the temperature range is performed for 1 second to 1000 seconds, whereby a desired volume fraction of austenite is obtained. In a case where the highest heating temperature is lower than Ac1 + 20°C, a volume fraction of austenite that undergoes reverse transformation by heating becomes insufficient, and the volume fractions of bainite, tempered martensite, and residual austenite generated in the subsequent cooling and soaking steps cannot satisfy the ranges of the present embodiment. On the other hand, when heating is performed to a temperature of Ac3 (°C) or higher, the lath-like structure formed in the first annealing step is completely lost, and the aspect ratio of residual austenite cannot be controlled to 2.0 or more. A holding time in the same temperature range needs to be at least 1 second, and an upper limit thereof is set to industrially realistic 1000 seconds.

Regarding the steel sheet heated to the highest heating temperature, in order to obtain the volume fraction of residual austenite within the range of the present embodiment, the degree of bainitic transformation or martensitic transformation needs to be controlled. Therefore, the steel sheet heated to the highest heating temperature needs to be cooled to 250°C or lower. When the cooling stop temperature exceeds 250°C, bainitic transformation does not progress sufficiently during holding in the subsequent soaking step, or tempering of martensite obtained by cooling to 250°C or lower cannot be achieved, so that desired volume fractions of microstructures cannot be obtained.

<Soaking Step>

[Cold-Rolled Steel Sheet after Second Annealing Step Is Held in Temperature Range of 260°C to 450°C for 10 to 1000 Seconds]

In order to obtain predetermined volume fractions of bainite and residual austenite in the present embodiment, the steel sheet cooled to 250°C or lower in the second annealing step is heated and held in a temperature range of 260°C to 450°C. By holding the steel sheet in the temperature range, carbon atoms discharged by the bainitic transformation are concentrated in untransformed austenite and stability of the untransformed austenite is improved, so that a desired amount of residual austenite can be secured. In a case where a holding temperature in the soaking step is lower than 260°C, the progress of the bainitic transformation slows down, and finally not only the volume fraction of bainite but also the volume fraction of residual austenite become insufficient. On the other hand, in a case where the steel sheet is held at a temperature higher than 450°C, not only is the strength of bainite lowered, but also carbide is generated in austenite, resulting in a reduction in a C concentration in austenite. Accordingly, the volume fraction of residual austenite is insufficient when finally cooled. A holding time in the same temperature range needs to be at least 10 seconds, and in a case where the holding time is shorter than 10 seconds, the bainitic transformation insufficiently progresses. Moreover, holding the steel sheet for longer than 1000 seconds is industrially difficult. Therefore, an upper limit of the holding time is set to 1000 seconds.

Cooling after the holding in the soaking step is not limited.

[In At Least One of First Annealing Step and Second Annealing Step, When Holding at Highest Heating Temperature Is Performed for 1 Second to 1000 Seconds, Atmosphere $\log(PH_2O/PH_2)$ in Heating Furnace Satisfies $-1.10 \le \log(PH_2O/PH_2) \le -0.07$]

In a case where the surface layer of the steel sheet is subjected to decarburization, it is preferable to increase an oxygen potential $\log(PH_2O/PH_2)$ in the two annealing steps. When the oxygen potential is less than -1.10, the oxygen potential is insufficient, and decarburization does not progress, so that the Vickers hardness $Hv_{sur}$ at a depth position of 30 $\mu$m from the surface cannot be sufficiently reduced (the surface layer cannot be softened). On the other hand, when the oxygen potential is higher than -0.07, iron itself begins to be oxidized and a product cannot be obtained therefrom. Therefore, an upper limit of the oxygen potential is set to -0.07. The decarburization may be performed in either the first annealing step or the second annealing step, or both. The progress of decarburization improves the bendability, but lower the strength of the steel sheet. Therefore, the oxygen potential may be adjusted according to required properties. $\log(PH_2O/PH_2)$ may be within the above range before the temperature is raised to the highest heating temperature.

Next, details of the manufacturing conditions of (5) above will be described. The details will be described starting with the finish rolling of the hot rolling step, which is different from the manufacturing conditions of (4) above.

[Finish Rolling using Plurality of Rolling Stands]

The conditions for the finish rolling are not particularly limited. However, in a facility configuration consisting of a plurality of rolling mills generally used by those skilled in the art, a final pass outlet side temperature (finishing temperature) needs to be set to 850°C or higher. In a case where the finishing temperature is lower than 850°C, phase transformation from deformed austenite is accelerated, and a phase generated during high-temperature transformation, such as ferrite, occurs during cooling, and the entire surface cannot be formed into a lath-like structure.

[Hot-Rolled Steel Sheet Is Coiled in Temperature Range of 25°C to 450°C (Coiling Step)]

A coiling temperature is set to 25°C to 450°C. The reason why an upper limit temperature is different from 680°C in the manufacturing conditions of (4) above is that the microstructure of the hot-rolled steel sheet under the manufacturing conditions of (5) is a microstructure primarily containing bainite or martensite. In a case where the steel sheet is coiled at a temperature higher than 450°C, the microstructure primarily containing bainite is not formed, and pearlite or the like is generated. Therefore, the upper limit temperature is set to 450°C.

<Cold Rolling Step>

[As Necessary, Cold Rolling Is Performed at Rolling Reduction of 30% or Lower to Obtain Cold-Rolled Steel Sheet]

The hot-rolled steel sheet after the coiling step may be subjected to cold rolling in order to improve sheet thickness accuracy and flatness.

However, in a case where the rolling reduction is too high, strain is excessively introduced, and recrystallization of ferrite during heating for annealing is accelerated, so that a needle-like structure derived from laths cannot be maintained. Therefore, in a case where cold rolling is performed, the rolling reduction (cold rolling ratio) in the cold rolling is set to 30% or less. In addition, as the rolling reduction increases, workability of a product deteriorates. Therefore, the rolling reduction is preferably 10% or less, and more preferably 5% or less. Since cold rolling does not have to be performed, a lower limit of the rolling reduction is 0%.

<First Annealing Step>

[First Annealing Is Performed on Hot-Rolled Steel Sheet or Cold-Rolled Steel Sheet]

As described above, in the coiling step, the microstructure primarily containing bainite or martensite is formed. Therefore, after the coiling step, a heat treatment in the first annealing step is performed on the hot-rolled steel sheet that is not subjected to cold rolling, or the cold-rolled steel sheet that has been subjected to cold rolling at a rolling reduction of 30% or less.

[Holding at Highest Heating Temperature of Ac1 + 20°C or Higher and Lower Than Ac3 (°C) Is Performed for 1 Second to 1000 Seconds and thereafter Cooling to 250°C or Lower Is Performed]

Due to phase transformation during the coiling step, the microstructure primarily contains bainite and martensite. Therefore, in the first annealing step, holding at the highest heating temperature of Ac1 + 20°C or higher and lower than Ac3 (°C) is performed for 1 second to 1000 seconds, whereby a desired volume fraction of austenite is obtained. In a case where the highest heating temperature is lower than Ac1 + 20°C, a volume fraction of austenite that undergoes reverse transformation by heating becomes insufficient, and the volume fractions of bainite, tempered martensite, and residual austenite generated in the subsequent cooling and soaking steps cannot satisfy the desired ranges. On the other hand, when heating is performed to a temperature of Ac3 (°C) or higher, the lath-like structure formed in the first annealing step is completely lost, and the aspect ratio of residual austenite cannot be controlled to 2.0 or more. A holding time in the same temperature range needs to be at least 1 second, and an upper limit thereof is set to industrially realistic 1000 seconds.

Regarding the steel sheet heated to the highest heating temperature, in order to obtain the volume fraction of residual austenite within the range of the present disclosure, bainitic transformation or martensitic transformation needs to be achieved. Therefore, the steel sheet heated to the highest heating temperature needs to be cooled to 250°C or lower. When the cooling stop temperature exceeds 250°C, bainitic transformation does not progress sufficiently during holding in the subsequent soaking step, or tempering of martensite obtained by cooling to 250°C or lower cannot be achieved, so that desired volume fractions of microstructures cannot be obtained.

<Soaking Step>

[Hot-Rolled Steel Sheet or Cold-Rolled Steel Sheet after First Annealing Step Is Held in Temperature Range of 260°C to 450°C for 10 to 1000 Seconds]

In order to obtain predetermined volume fractions of bainite and residual austenite in the present embodiment, the steel sheet cooled to 250°C or lower in the second annealing step is heated and held in a temperature range of 260°C to 450°C. By holding the steel sheet in the temperature range, carbon atoms discharged by the bainitic transformation are concentrated in untransformed austenite and stability of the untransformed austenite is improved, so that a desired amount of residual austenite can be secured. In a case where a holding temperature in the soaking step is lower than 260°C, the progress of the bainitic transformation slows down, and finally not only the volume fraction of bainite but also the volume fraction of residual austenite become insufficient. On the other hand, in a case where the steel sheet is held at a temperature higher than 450°C, not only is the strength of bainite lowered, but also carbide is generated in austenite, resulting in a reduction in a C concentration in austenite. Accordingly, the volume fraction of residual austenite is insufficient when finally cooled. A holding time in the same temperature range needs to be at least 10 seconds, and in a case where the holding time is shorter than 10 seconds, the bainitic transformation insufficiently progresses. Moreover, holding the steel sheet for longer than 1000 seconds is industrially difficult. Therefore, an upper limit of the holding time is set to 1000 seconds.

Cooling after the holding in the soaking step is not limited.

[In First Annealing Step, When holding at Highest Heating Temperature Is Performed for 1 Second to 1000 Seconds, Atmosphere $\log(PH_2O/PH_2)$ in Heating Furnace Satisfies $-1.10 \leq \log(PH_2O/PH_2) \leq -0.07$]

In a case where the surface layer of the steel sheet is subjected to decarburization, it is preferable to increase an oxygen potential $\log(PH_2O/PH_2)$ in the first annealing step. When the oxygen potential is less than -1.10, the oxygen potential is insufficient, and decarburization does not progress, so that the Vickers hardness $Hv_{sur}$ at a depth position of 30 $\mu$m from the surface cannot be sufficiently reduced (the surface layer cannot be softened). On the other hand, when the oxygen potential is higher than -0.07, iron itself begins to be oxidized and a product cannot be obtained therefrom. Therefore, an upper limit of the oxygen potential is set to -0.07. $\log(PH_2O/PH_2)$ may be within the above range before the temperature is raised to the highest heating temperature.

<Plating Step>

Details of a plating step will be described.

In the present method, regardless of which of the manufacturing methods (4) and (5) is selected, a plating step of immersing the steel sheet in a plating bath may be performed as necessary. By this step, a plating layer is formed on the surface of the steel sheet. The plating step is preferably a hot-dip galvanizing step in which the steel sheet is immersed in a hot-dip galvanizing bath. In a case where a hot-dip galvanized layer is formed, immersion in the hot-dip galvanizing bath may be performed during the cooling from the highest heating temperature to 250°C or lower in the annealing step before the soaking step, or after the soaking step. Although a temperature of the steel sheet at this time has little effect on performance of the steel sheet, when a difference between the temperature of the steel sheet and a temperature of the plating bath is too large, there may be cases where the temperature of the plating bath changes, causing a problem in an operation. Therefore, it is desirable to provide a step of reheating or cooling the steel sheet in a range of the temperature of the plating bath - 20°C to the temperature of the plating bath + 20°C. Hot-dip galvanizing may be performed according to an ordinary method. For example, the temperature of the plating bath may be 440°C to 470°C and an immersion time may be 5 seconds or shorter. The plating bath preferably contains 0.08 to 0.2 mass% of Al and Zn as a remainder, but may also contain Fe, Si, Mg, Mn, Cr, Ti, and Pb as impurities. Furthermore, it is preferable to control an adhesion amount of the plating by a known method such as gas wiping. The adhesion amount is preferably 25 to 75 g/m$^2$ per one surface.

[Alloying Treatment]

A hot-dip galvanized steel sheet in which the hot-dip galvanized layer is formed may be subjected to an alloying treatment as necessary. In this case, when an alloying treatment temperature is lower than 460°C, an alloying rate becomes slow, and productivity is impaired. Moreover, an irregular alloying treatment occurs. Accordingly, the alloying treatment temperature is set to 460°C or higher. On the other hand, when the alloying treatment temperature exceeds 600°C, alloying progresses excessively, and there may be cases where plating adhesion of the steel sheet deteriorates. In addition, pearlitic transformation progresses and there may be cases where a desired metallographic structure cannot be obtained. Therefore, the alloying treatment temperature is set to 600°C or lower.

After the soaking step, or after the plating step and/or the alloying treatment in a case where the plating step and/or the alloying treatment is performed after the soaking, cooling to room temperature is performed to obtain a final product. Temper rolling may be performed to flatten the steel sheet and adjust surface roughness. In this case, an elongation is preferably set to 2% or less in order to avoid deterioration of ductility.

[Examples]

Next, examples of the present invention will be described. Conditions in the examples are one example of conditions adopted to confirm the feasibility and effects of the present invention. The present invention is not limited to this one example of conditions. The present invention can adopt various conditions as long as the object of the present invention is achieved without departing from the gist of the present invention.

The transformation temperatures Ac1 (°C) and Ac3 (°C) used to limit the manufacturing conditions were calculated using the following formulas: (element symbols in the formulas indicate the mass% of the corresponding elements in steel)

$$Ac1 = 723 - 10.7 \times Mn - 16.9 \times Ni + 29.1 \times Si + 16.9 \times Cr$$

$$Ac3 = 912 - 230.5 \times C + 31.6 \times Si - 20.4 \times Mn - 39.8 \times Cu - 18.1 \times Ni -$$

$$14.8 \times Cr + 16.8 \times Mo$$

Example 1 relates to inventions according to Claims 1, 2, 3, 4, 6, 8, and 10 and show examples of conditions thereof, and Example 2 relates to inventions according to Claims 1, 2, 3, 5, 7, 9, and 11 and show examples of conditions thereof.

(Example 1)

Steels having the chemical composition shown in Table 1 were cast to produce slabs having a thickness of 200 to 300 mm. In Table 1, the unit is mass%, and the remainder other than the components shown in Table 1 is Fe and impurities. These slab were subjected to hot rolling under the conditions shown in Tables 2-1 to 2-3 to manufacture hot-rolled steel sheets. During the hot rolling, rough rolling was performed so that the total rolling reduction at 1050°C or higher became 60% to 90%, and finish rolling was performed by a plurality of rolling stands so that a finishing temperature became 800°C or higher. Thereafter, the hot-rolled steel sheets were pickled to remove the scale on the surface. Thereafter, under the conditions shown in Tables 2-1 to 2-6, a cold rolling step, a first annealing step, a second annealing step, and a soaking step were performed. Under a condition in which hot-dip galvanizing or further alloying was performed before the soaking step or after the soaking step, hot-dip galvanizing is described.

[Table 1]

| Kind of steel | C | Si | Mn | P | S | Al | N | O | Ti | V | Nb | Cr | Ni | Cu | Co | Mo | W | B | Sn | Sb | Others | Si + Al |
|---|---|---|---|---|---|---|---|---|---|---|---|---|---|---|---|---|---|---|---|---|---|---|
| A | 0.172 | 0.53 | 2.55 | 0.011 | 0.0021 | 0.030 | 0.0033 | 0.0011 | | 0.11 | | | | | | | | | | | Bi: 0.0052 | 0.56 |
| B | 0.225 | 1.85 | 2.34 | 0.009 | 0.0019 | 0.015 | 0.0021 | 0.0012 | | | 0.12 | | | | | | | | | | | 1.87 |
| C | 0.156 | 0.66 | 3.43 | 0.008 | 0.0031 | 0.713 | 0.0031 | 0.0013 | | | | | 0.21 | 0.22 | | | | | | | | 1.37 |
| D | 0.214 | 1.52 | 2.22 | 0.013 | 0.0045 | 0.026 | 0.0041 | 0.0015 | | | 0.011 | | | | | | | | | | | 1.55 |
| E | 0.285 | 1.67 | 1.52 | 0.021 | 0.0022 | 0.033 | 0.0022 | 0.0017 | 0.031 | | | | | | | | | 0.0021 | | | | 1.70 |
| F | 0.156 | 2.05 | 1.71 | 0.011 | 0.0021 | 0.034 | 0.0022 | 0.0031 | | | | | | | 0.21 | | 0.05 | | | | | 2.08 |
| G | 0.188 | 0.96 | 2.15 | 0.012 | 0.0033 | 0.512 | 0.0021 | 0.0021 | | | | | | | | 0.11 | | | | | REM: 0.00031 | 1.47 |
| H | 0.152 | 0.12 | 2.96 | 0.010 | 0.0052 | 1.432 | 0.0025 | 0.0022 | | | | | | | | | | | | | Mg: 0.0052 | 1.55 |
| I | 0.213 | 1.52 | 2.31 | 0.009 | 0.0015 | 0.032 | 0.0024 | 0.0024 | | | | | | | | | | | 0.05 | 0.06 | | 1.55 |
| J | 0.388 | 0.98 | 1.65 | 0.015 | 0.0013 | 0.312 | 0.0033 | 0.0011 | | | 0.22 | | | | | 0.22 | | | | | Ca: 0.0031 | 1.29 |
| K | 0.151 | 2.35 | 1.52 | 0.011 | 0.0015 | 0.387 | 0.0035 | 0.0012 | | | | | 0.41 | | | 0.06 | | | | | Ce: 0.0049, Zr: 0.0055 | 2.74 |
| L | 0.195 | 1.11 | 2.35 | 0.012 | 0.0021 | 0.055 | 0.0041 | 0.0014 | | | | | | | | | | | | | Hf: 0.0039 | 1.17 |
| M | 0.222 | 1.35 | 2.65 | 0.008 | 0.0032 | 0.422 | 0.0048 | 0.0015 | 0.042 | | | | | | | | | 0.0018 | | | | 1.77 |
| N | 0.195 | 1.85 | 2.72 | 0.011 | 0.0022 | 0.041 | 0.0021 | 0.0018 | 0.022 | | | | | | | 0.09 | | 0.0021 | | | | 1.89 |
| O | 0.231 | 1.73 | 2.43 | 0.007 | 0.0022 | 1.450 | 0.0032 | 0.0008 | 0.021 | | | | | | | 0.21 | | 0.0022 | | | | **3.18** |
| P | **0.091** | 1.65 | 2.34 | 0.008 | 0.0025 | 0.043 | 0.0039 | 0.0011 | | | | | | | | | | | | | | 1.69 |
| Q | 0.196 | 0.31 | 2.46 | 0.013 | 0.0031 | 0.044 | 0.0031 | 0.0016 | | | | | | | | | | | | | | **0.35** |
| R | 0.182 | 1.55 | **0.99** | 0.012 | 0.0035 | 0.195 | 0.0028 | 0.0021 | | | | | | | | | | | | | | 1.75 |
| S | 0.190 | 1.21 | **3.65** | 0.007 | 0.0033 | 0.045 | 0.0029 | 0.0025 | | | | | | | | | | | | | | 1.26 |
| T | **0.421** | 1.65 | 1.82 | 0.012 | 0.0041 | 0.041 | 0.0028 | 0.0024 | | | | | | | | | | | | | | 1.69 |
| U | 0.172 | **2.65** | 2.10 | 0.009 | 0.0035 | 0.031 | 0.0034 | 0.0018 | | | | | | | | | | | | | | 2.68 |
| V | 0.196 | 1.11 | 2.55 | 0.012 | 0.0021 | **1.755** | 0.0025 | 0.0011 | | | | | | | | | | | | | | 2.87 |
| W | 0.173 | 0.53 | 2.54 | 0.012 | 0.0021 | 0.030 | 0.0036 | 0.0011 | | 0.11 | | | | | | | | | | | Bi: 0.0052, La: 0.003 | 0.56 |
| X | 0.179 | 1.55 | **1.45** | 0.012 | 0.0035 | 0.195 | 0.0028 | 0.0021 | | | | | | | | | | | | | | 1.75 |

Bold underlines indicate outside of the range of the present invention. Blanks in the table indicate that the corresponding chemical element was not intentionally added.

[Table 2-1]

| No. | Kind of steel | Casting conditions | | | Hot rolling step | | | | Cold rolling step |
|---|---|---|---|---|---|---|---|---|---|
| | | Solidification rate at position of 10 mm from surface of molten steel | Molten steel casting amount per unit time | Average cooling rate between liquidus temperature and solidus temperature of surface layer area at depth position of 5 mm | Average heating rate of slab (Ac1 to Ac1 + 30°C) | Heating temperature of slab | Heating time at 1200°C or higher | Coiling temperature | Cold rolling ratio |
| | | °C/min | tons/min | °C/sec | °C/min | °C | min | °C | % |
| 1 | A | 120 | 2.2 | 20 | 4.3 | 1230 | 81 | 650 | 52 |
| 2 | A | 130 | 2.4 | 24 | 4.6 | 1215 | 49 | 540 | 41 |
| 3 | A | 105 | 2.2 | 15 | 5.1 | 1224 | 72 | 580 | 43 |
| 4 | A | 130 | 3.5 | 12 | 6.4 | 1225 | 69 | 550 | 42 |
| 5 | A | 130 | 4.1 | 16 | 3.3 | 1224 | 68 | **720** | 44 |
| 6 | B | 160 | 4.2 | 19 | 4.5 | 1224 | 71 | 590 | 50 |
| 7 | B | 180 | 3.3 | 18 | 4.8 | 1224 | 75 | 580 | 52 |
| 8 | B | 170 | 3.4 | 12 | 4.0 | 1225 | 78 | 480 | 45 |
| 9 | B | **1035** | 2.5 | 21 | - | - | - | - | - |
| 10 | C | 110 | 2.4 | 22 | 4.6 | 1241 | 98 | 550 | 50 |
| 11 | C | 140 | 2.6 | 11 | 5.4 | 1233 | 74 | 540 | 48 |
| 12 | C | 160 | 2.2 | 8 | 6.1 | 1235 | 102 | 580 | 52 |
| 13 | C | **90** | 3.1 | 8 | 5.8 | 1245 | 127 | 575 | 52 |
| 14 | D | 160 | 4.1 | 9 | 4.7 | 1210 | 45 | 655 | 58 |
| 15 | D | 130 | 4.0 | 12 | 4.6 | 1231 | 89 | 630 | 52 |
| 16 | D | 170 | 3.1 | 19 | 4.1 | 1211 | 49 | 590 | 49 |
| 17 | D | 120 | 2.8 | **3** | 3.9 | 1231 | 83 | 555 | 52 |
| 18 | D | 110 | **1.8** | 8 | 4.5 | 1241 | 91 | 540 | 51 |
| 19 | D | 130 | **6.8** | 7 | 4.6 | 1222 | 81 | 495 | 53 |
| 20 | E | 120 | 2.1 | 7 | 4.8 | 1225 | 79 | 480 | 52 |
| 21 | E | 150 | 3.3 | 10 | 5.5 | 1226 | 91 | 670 | 52 |
| 22 | E | 120 | 3.4 | 12 | 5.6 | 1223 | 44 | 575 | 54 |
| 23 | E | 140 | 3.5 | 14 | **1.8** | 1241 | 91 | 580 | 55 |
| 24 | F | 110 | 3.6 | 22 | 4.2 | 1249 | 100 | 560 | 54 |
| 25 | F | 110 | 3.1 | 21 | 5.1 | 1251 | 88 | 540 | 48 |
| 26 | F | 120 | 4.4 | 13 | 4.8 | **1195** | 105 | 550 | 49 |
| 27 | F | 130 | 4.5 | 15 | 5.4 | 1215 | **15** | 570 | 55 |
| 28 | G | 140 | 3.2 | 16 | 5.6 | 1234 | 77 | 565 | 51 |
| 29 | G | 130 | 3.5 | 22 | 4.2 | 1223 | 91 | 570 | 52 |
| 30 | G | 120 | 3.8 | 13 | 4.2 | 1234 | 90 | 480 | 52 |
| 31 | G | 160 | 3.4 | 8 | 4.3 | 1241 | 108 | 380 | 35 |
| 32 | H | 140 | 3.5 | 11 | 4.2 | 1232 | 85 | 370 | 34 |

Bold underlines indicate outside of the range of the present invention.

[Table 2-2]

| No. | Kind of steel | Casting conditions | | | Hot rolling step | | | | Cold rolling step |
|---|---|---|---|---|---|---|---|---|---|
| | | Solidification rate at position of 10 mm from surface of molten steel | Molten steel casting amount per unit time | Average cooling rate between liquidus temperature and solidus temperature of surface layer area at depth position of 5 mm | Average heating rate of slab (Ac1 to Ac1 + 30°C) | Heating temperature of slab | Heating time at 1200°C or higher | Coiling temperature | Cold rolling ratio |
| | | °C/min | tons/min | °C/sec | °C/min | °C | min | °C | % |
| 33 | I | 150 | 3.4 | 9 | 3.7 | 1243 | 89 | 250 | 35 |
| 34 | J | 130 | 3.3 | 14 | 3.8 | 1244 | 99 | 85 | 31 |
| 35 | K | 120 | 2.5 | 15 | 4.1 | 1238 | 109 | 440 | 44 |
| 36 | K | 120 | 2.6 | 16 | 3.8 | 1240 | 99 | 500 | 47 |
| 37 | L | 120 | 2.5 | 9 | 3.2 | 1241 | 107 | 540 | 49 |
| 38 | M | 130 | 2.6 | 10 | 4.8 | 1226 | 76 | 550 | 48 |
| 39 | M | 140 | 3.8 | 15 | 3.8 | 1228 | 81 | 535 | 46 |
| 40 | M | 130 | 4.1 | 19 | 3.7 | 1231 | 85 | 620 | 52 |
| 41 | N | 140 | 4.4 | 22 | 3.4 | 1227 | 99 | 610 | 51 |
| 42 | N | 120 | 2.3 | 11 | 3.5 | 1223 | 71 | 615 | 55 |
| 43 | N | 130 | 3.3 | 13 | 3.7 | 1219 | 75 | 480 | 45 |
| 44 | O | 120 | 2.6 | 14 | - | - | - | - | - |
| 45 | P | 150 | 3.4 | 13 | 4.1 | 1244 | 108 | 650 | 52 |
| 46 | Q | 130 | 3.1 | 14 | 4.2 | 1219 | 67 | 590 | 57 |
| 47 | R | 120 | 2.6 | 21 | 4.6 | 1244 | 99 | 625 | 59 |
| 48 | S | 120 | 2.5 | 22 | 4.5 | 1234 | 108 | 630 | - |
| 49 | T | 120 | 2.9 | 8 | 5.1 | 1211 | 45 | 585 | - |
| 50 | U | 130 | 2.1 | 7 | - | - | - | - | - |
| 51 | V | 140 | 2.5 | 11 | - | - | - | - | - |
| 52 | A | 120 | 2.2 | 20 | 4.3 | 1230 | 81 | 650 | 52 |
| 53 | E | 120 | 2.1 | 7 | 4.8 | 1225 | 79 | 480 | 52 |
| 54 | E | 120 | 2.1 | 7 | 4.8 | 1225 | 79 | 480 | 52 |
| 55 | E | 120 | 2.1 | 7 | 4.8 | 1225 | 79 | 480 | 52 |
| 56 | E | 120 | 2.1 | 7 | 4.8 | 1225 | 79 | 480 | 52 |
| 57 | A | 120 | 2.2 | 20 | 4.3 | 1230 | 81 | 650 | 52 |
| 58 | A | 120 | 2.2 | 20 | 4.3 | 1230 | 81 | 650 | 52 |
| 59 | B | 170 | 3.4 | 12 | 4.0 | 1225 | 78 | 480 | 45 |
| 60 | B | 170 | 3.4 | 12 | 4.0 | 1225 | 78 | 480 | 45 |
| 61 | N | 120 | 2.3 | 11 | 3.5 | 1223 | 71 | 615 | 55 |
| 62 | G | 130 | 3.5 | 22 | 4.2 | 1223 | 91 | 570 | 52 |
| 63 | W | 120 | 2.3 | 20 | 4.3 | 1231 | 81 | 650 | 52 |
| 64 | X | 120 | 2.7 | 21 | 4.6 | 1245 | 99 | 625 | 59 |

[Table 2-3]

| No. | Kind of steel | First annealing step | | | | | Second annealing step | | |
| | | Heating | | | Cooling | | Heating | | Cooling |
| | | Average heating rate between Ac1 and Ac1 + 30°C | Highest heating temperature | Holding time between Ac3 to 950°C | Average cooling rate between highest heating temperature and 650°C | Cooling stop temperature | Highest heating temperature | Holding time between Ac1 + 20°C to Ac3°C | Cooling stop temperature from highest heating temperature |
| | | °C/sec | °C | sec | °C/sec | °C | °C | sec | °C |
| 1 | A | 4.4 | 845 | 121 | 5.5 | 265 | 785 | 170 | 240 |
| 2 | A | 5.2 | 850 | 145 | 6.7 | 270 | 765 | 180 | 235 |
| 3 | A | 5.4 | 860 | 215 | 9.3 | **470** | 755 | 220 | 210 |
| 4 | A | 4.8 | 880 | 95 | 4.7 | 330 | 765 | 150 | 225 |
| 5 | A | 4.4 | 890 | 130 | 5.8 | 235 | 760 | 175 | 220 |
| 6 | B | 4.8 | 875 | 134 | 6.1 | 220 | 780 | 180 | 225 |
| 7 | B | 3.8 | 880 | 145 | 6.0 | 210 | **755** | 175 | 230 |
| 8 | B | 4.4 | 875 | 155 | 6.7 | 195 | 795 | 150 | 235 |
| 9 | B | - | - | - | - | - | - | - | - |
| 10 | C | 4.4 | 830 | 152 | 6.6 | 230 | 750 | 190 | 195 |
| 11 | C | 5.1 | 835 | 134 | 6.3 | 430 | 770 | 150 | **275** |
| 12 | C | 4.6 | 840 | 89 | 4.4 | 250 | **835** | 120 | 195 |
| 13 | C | 4.2 | 830 | 205 | 8.3 | 310 | 780 | 190 | 190 |
| 14 | D | 5.1 | 870 | 139 | 6.4 | 250 | 805 | 160 | 210 |
| 15 | D | 4.9 | **830** | 148 | 6.7 | 265 | 810 | 165 | 215 |
| 16 | D | 5.1 | 885 | 144 | 6.6 | 310 | 820 | 155 | 220 |
| 17 | D | 5.2 | 890 | 156 | 7.1 | 245 | 780 | 145 | 180 |
| 18 | D | 4.9 | 880 | 164 | 7.2 | 260 | 790 | 165 | 185 |
| 19 | D | 3.8 | 880 | 172 | 7.0 | 275 | 780 | 135 | 170 |
| 20 | E | 3.7 | 870 | 190 | 7.5 | 280 | 780 | 190 | 165 |
| 21 | E | 4.9 | 875 | 218 | 9.1 | 290 | 785 | 205 | 220 |
| 22 | E | 4.8 | 880 | 105 | 5.1 | 320 | 790 | 210 | **265** |
| 23 | E | 4.4 | 880 | 192 | 8.0 | 335 | 790 | 180 | 230 |
| 24 | F | 4.8 | 920 | 182 | 7.8 | 315 | 805 | 185 | 215 |
| 25 | F | 4.9 | 910 | 161 | 7.1 | 185 | 810 | 195 | 215 |
| 26 | F | 4.7 | 910 | 167 | 7.2 | 215 | 800 | 165 | 220 |
| 27 | F | 4.9 | 915 | 130 | 6.0 | 180 | 790 | 170 | 235 |
| 28 | G | 4.8 | 860 | 197 | 8.3 | 225 | 795 | 205 | 240 |
| 29 | G | 4.4 | 865 | 199 | 8.2 | 265 | 780 | 190 | 230 |
| 30 | G | 4.4 | 880 | 210 | **0.8** | 245 | 785 | 195 | 220 |
| 31 | G | **0.4** | 870 | 130 | 6.0 | 250 | 810 | 165 | 225 |
| 32 | H | 4.9 | 840 | 150 | 6.7 | 280 | 790 | 175 | 195 |

Bold underlines indicate outside of the range of the present invention.

[Table 2-4]

| No. | Kind of steel | First annealing step | | | | | Second annealing step | | |
|---|---|---|---|---|---|---|---|---|---|
| | | Heating | | | Cooling | | Heating | | Cooling |
| | | Average heating rate between Ac1 and Ac1 + 30°C | Highest heating temperature | Holding time between Ac3 to 950°C | Average cooling rate between highest heating temperature and 650°C | Cooling stop temperature | Highest heating temperature | Holding time between Ac1 + 20°C to Ac3°C | Cooling stop temperature from highest heating temperature |
| | | °C/sec | °C | sec | °C/sec | °C | °C | sec | °C |
| 33 | I | 4.8 | 880 | 160 | 7.0 | 290 | 780 | 205 | 190 |
| 34 | J | 5.0 | 840 | 130 | 6.1 | 235 | 785 | 220 | 195 |
| 35 | K | 5.2 | 920 | 124 | 6.0 | 250 | 790 | 155 | 175 |
| 36 | K | 5.1 | 915 | 130 | 5.8 | 265 | 795 | 160 | 175 |
| 37 | L | 5.1 | 865 | 134 | 6.3 | 45 | 785 | 170 | 190 |
| 38 | M | 4.4 | 860 | 99 | 4.7 | 175 | 790 | 160 | 185 |
| 39 | M | 3.8 | 875 | 137 | 5.7 | 165 | 780 | 195 | 210 |
| 40 | M | 3.8 | 880 | 204 | 8.1 | 280 | **740** | 220 | 225 |
| 41 | N | 3.9 | 885 | 215 | 8.5 | 240 | 805 | 210 | 230 |
| 42 | N | 4.2 | 880 | 230 | 9.2 | 230 | 810 | 195 | 235 |
| 43 | N | 4.2 | 890 | 210 | 8.5 | 240 | 795 | 210 | **270** |
| 44 | O | - | - | - | - | - | - | - | - |
| 45 | P | 3.8 | 910 | 195 | 7.8 | 260 | 790 | 205 | 220 |
| 46 | Q | 3.7 | 840 | 140 | 5.8 | 240 | 785 | 195 | 235 |
| 47 | R | 3.8 | 905 | 144 | 6.0 | 250 | 805 | 170 | 225 |
| 48 | S | - | - | - | - | - | - | - | - |
| 49 | T | - | - | - | - | - | - | - | - |
| 50 | U | - | - | - | - | - | - | - | - |
| 51 | V | - | - | - | - | - | - | - | - |
| 52 | A | 4.4 | 847 | 122 | 5.5 | 265 | 788 | 173 | 240 |
| 53 | E | 3.7 | 873 | 191 | 7.5 | 280 | 781 | 191 | 165 |
| 54 | E | 3.7 | 874 | 194 | 7.5 | 280 | 782 | 193 | 165 |
| 55 | E | 3.7 | 873 | 191 | 7.5 | 280 | 781 | 191 | 165 |
| 56 | E | 3.7 | 873 | 191 | 7.5 | 280 | 781 | 191 | 165 |
| 57 | A | 4.4 | 854 | 130 | 5.5 | 265 | 794 | 179 | 240 |
| 58 | A | 4.4 | 856 | 132 | 5.5 | 265 | 796 | 181 | 240 |
| 59 | B | 4.4 | 875 | 155 | 6.7 | 195 | 795 | 152 | 241 |
| 60 | B | 4.4 | 875 | 155 | 6.7 | 195 | 795 | 152 | 241 |
| 61 | N | 4.2 | 880 | 230 | 9.2 | 230 | 810 | 194 | 225 |
| 62 | G | 4.4 | 865 | 199 | 8.2 | 266 | 779 | 190 | 232 |
| 63 | W | 4.4 | 844 | 121 | 5.5 | 264 | 785 | 170 | 241 |
| 64 | X | 3.8 | 904 | 144 | 6.0 | 249 | 805 | 170 | 226 |

Bold underlines indicate outside of the range of the present invention.

[Table 2-5]

| No. | Kind of steel | Soaking step | | Atmosphere in heating furnace | | Hot-dip galvanizing | Note |
| | | Holding temperature after stopping cooling | Holding time after stopping cooling | First annealing step | Second annealing step | Hot-dip galvanizing before soaking step or after soaking step | |
| | | | | $\log(PH_2O/H_2)$ | $\log(PH_2O/H_2)$ | | |
| | | °C | sec | - | - | - | |
| 1 | A | 395 | 390 | -1.70 | -1.72 | - | Example of Present Invention |
| 2 | A | 385 | 410 | -1.69 | -0.73 | Hot-dip galvanizing | Example of Present Invention |
| 3 | A | 360 | 380 | -1.63 | -1.65 | - | Comparative Example |
| 4 | A | **470** | 375 | -1.79 | -1.72 | - | Comparative Example |
| 5 | A | 385 | 350 | -0.72 | -0.68 | Hot-dip galvanizing | Comparative Example |
| 6 | B | 375 | 360 | -1.65 | -1.63 | - | Example of Present Invention |
| 7 | B | 380 | 410 | -0.73 | -1.71 | - | Comparative Example |
| 8 | B | 410 | 420 | -1.68 | -1.73 | - | Example of Present Invention |
| 9 | B | - | - | - | - | - | Comparative Example |
| 10 | C | 390 | 340 | -0.69 | -0.73 | Hot-dip galvanizing | Example of Present Invention |
| 11 | C | 350 | 330 | -0.67 | -0.66 | Hot-dip galvanizing | Comparative Example |
| 12 | C | 365 | 310 | -1.66 | -0.72 | Hot-dip galvanizing | Comparative Example |
| 13 | C | 350 | 380 | -1.65 | -1.66 | - | Comparative Example |
| 14 | D | 375 | 375 | -0.73 | -1.68 | - | Example of Present Invention |
| 15 | D | 380 | 365 | -1.68 | -1.66 | - | Comparative Example |
| 16 | D | **240** | 310 | -1.71 | -0.71 | Hot-dip galvanizing | Comparative Example |
| 17 | D | 355 | 350 | -0.69 | -0.72 | Hot-dip galvanizing | Comparative Example |
| 18 | D | 360 | 340 | -0.68 | -0.73 | - | Comparative Example |
| 19 | D | 390 | 330 | -1.68 | -0.74 | - | Comparative Example |
| 20 | E | 375 | 350 | -1.71 | -1.65 | - | Example of Present Invention |
| 21 | E | 380 | 365 | -0.69 | -0.73 | Hot-dip galvanizing | Example of Present Invention |
| 22 | E | 370 | 380 | -1.69 | -0.73 | Hot-dip galvanizing | Comparative Example |
| 23 | E | 405 | 350 | -1.65 | -1.66 | - | Comparative Example |
| 24 | F | 375 | 250 | -1.71 | -1.73 | - | Example of Present Invention |
| 25 | F | **240** | 210 | -1.71 | -1.71 | - | Comparative Example |
| 26 | F | 380 | 290 | -1.69 | -1.70 | - | Comparative Example |
| 27 | F | 395 | 380 | -1.66 | -1.65 | - | Comparative Example |
| 28 | G | 400 | 400 | -1.71 | -1.66 | - | Example of Present Invention |
| 29 | G | 405 | 410 | -1.69 | -0.73 | Hot-dip galvanizing | Example of Present Invention |
| 30 | G | 410 | 380 | -1.67 | -0.68 | Hot-dip galvanizing | Comparative Example |
| 31 | G | 390 | 380 | -1.66 | -1.72 | - | Comparative Example |
| 32 | H | 395 | 340 | -1.71 | -0.73 | - | Example of Present Invention |

Bold underlines indicate outside of the range of the present invention.

[Table 2-6]

| No. | Kind of steel | Soaking step | | Atmosphere in heating furnace | | Hot-dip galvanizing | Note |
|---|---|---|---|---|---|---|---|
| | | Holding temperature after stopping cooling | Holding time after stopping cooling | First annealing step | Second annealing step | Hot-dip galvanizing before soaking step or after soaking step | |
| | | | | $\log(PH_2O/H_2)$ | $\log(PH_2O/H_2)$ | | |
| | | °C | sec | - | - | - | |
| 33 | I | 380 | 345 | -1.65 | -1.66 | - | Example of Present Invention |
| 34 | J | 375 | 360 | -0.71 | -0.68 | Hot-dip galvanizing | Example of Present Invention |
| 35 | K | 390 | 330 | -1.72 | -0.71 | Hot-dip galvanizing | Example of Present Invention |
| 36 | K | 300 | 550 | -1.70 | -0.70 | Hot-dip galvanizing | Example of Present Invention |
| 37 | L | 380 | 320 | -1.72 | -0.77 | Hot-dip galvanizing | Example of Present Invention |
| 38 | M | 395 | 310 | -0.69 | -0.71 | Hot-dip galvanizing | Example of Present Invention |
| 39 | M | **470** | 290 | -1.72 | -1.66 | - | Comparative Example |
| 40 | M | 385 | 295 | -1.69 | -1.72 | - | Comparative Example |
| 41 | N | 390 | 390 | -0.69 | -0.73 | - | Example of Present Invention |
| 42 | N | 385 | 395 | -0.71 | -0.73 | Hot-dip galvanizing | Example of Present Invention |
| 43 | N | 395 | 340 | -0.69 | -0.73 | Hot-dip galvanizing | Comparative Example |
| 44 | O | - | - | - | - | - | Comparative Example |
| 45 | P | 415 | 360 | -1.72 | -1.60 | - | Comparative Example |
| 46 | Q | 405 | 210 | -1.72 | -0.71 | Hot-dip galvanizing | Comparative Example |
| 47 | R | 415 | 175 | -0.69 | -0.72 | Hot-dip galvanizing | Comparative Example |
| 48 | S | - | - | - | - | - | Comparative Example |
| 49 | T | - | - | - | - | - | Comparative Example |
| 50 | U | - | - | - | - | - | Comparative Example |
| 51 | V | - | - | - | - | - | Comparative Example |
| 52 | A | 395 | 390 | -1.70 | -1.72 | - | Example of Present Invention |
| 53 | E | 375 | 350 | -1.71 | -1.65 | - | Example of Present Invention |
| 54 | E | **255** | 350 | -1.71 | -1.65 | - | Comparative Example |
| 55 | E | 375 | 350 | -1.71 | -1.65 | - | Example of Present Invention |
| 56 | E | 375 | 350 | -1.71 | -1.65 | - | Example of Present Invention |
| 57 | A | 395 | 390 | -1.70 | -1.72 | - | Example of Present Invention |
| 58 | A | **455** | 390 | -1.70 | -1.72 | - | Comparative Example |
| 59 | B | 410 | 420 | -1.68 | -1.73 | - | Example of Present Invention |
| 60 | B | 410 | 420 | -1.68 | -1.73 | - | Example of Present Invention |
| 61 | N | 385 | 395 | -0.71 | -0.73 | Hot-dip galvanizing | Example of Present Invention |
| 62 | G | 405 | 410 | -1.69 | -0.73 | Hot-dip galvanizing | Example of Present Invention |
| 63 | W | 395 | 391 | -1.70 | -1.72 | - | Example of Present Invention |
| 64 | X | 415 | 176 | -0.69 | -0.72 | Hot-dip galvanizing | Comparative Example |

Bold underlines indicate outside of the range of the present invention.

Next, for each of the steel sheets obtained in this manner, a microstructure in a range of a 1/8 thickness to a 3/8 thickness centered on a 1/4 thickness position from the surface was observed by the above-described method, and volume fractions of ferrite, residual austenite, bainite, tempered martensite, fresh martensite, and pearlite were examined.

In addition, by the above-described method, a number proportion of residual austenite having an aspect ratio of 2.0 or more in the entire residual austenite in the range of the 1/8 thickness to the 3/8 thickness centered on the 1/4 thickness position from the surface were examined.

Furthermore, by the above-described method, a number density of inclusions and precipitates having a grain size of 1 μm or more in the range of the 1/8 thickness to the 3/8 thickness centered on the 1/4 thickness position from the surface, an average interval between Mn-concentrated portions at a 1/20 depth position of a sheet thickness from the surface, and a standard deviation of Mn concentrations in the residual austenite were examined.

For mechanical properties, a JIS No. 5 tensile test piece was collected from a direction perpendicular to a rolling direction, a tensile test was performed according to JIS Z2241 (2011), and tensile strength (TS) and total elongation (El) were measured. A gauge length was set to 50 mm, and a tension speed was set to 10 mm/min.

In addition, a hole expansion ratio ($\lambda$) was measured by performing "JFS T 1001 Method of hole expanding test" of The Japan Iron and Steel Federation Standard. A punch diameter was set to 10 mm, a punching clearance was set to 12%, and a punch shape was set to a conical punch with a 60° tip end portion.

Those having a TS of 980 MPa or more and a TS $\times$ El $\times$ $\lambda^{0.5}$/1000 of 80 or more were determined to have good mechanical properties and preferable press formability for use as vehicle component.

Toughness after introduction of plastic strain (toughness after press forming) was evaluated by the following method. A JIS No. 5 tensile test piece was collected from the direction perpendicular to the rolling direction, 5% plastic strain (prestrain) was applied by the tensile test, and a heat treatment of 170°C $\times$ 20 minutes was performed to simulate age hardening due to a heat input during baking coating. A Charpy test piece with a 2 mm V notch was collected from a parallel portion of the tensile test piece after the application of strain and the heat treatment simulating baking coating. Thereafter, a Charpy test was performed at a test temperature of -20°C according to JIS Z 2242 (2018). Those in which Charpy absorbed energy after the application of strain / Charpy absorbed energy before the application of plastic strain exceeded 0.7 were determined to be Very Good (VG), those of 0.5 to 0.7 were determined to be Good (G), and those of less than 0.5 were determined to be Bad (B). The evaluation of VG and G was regarded as acceptable.

In addition, in order to measure a ratio of a Vickers hardness $Hv_{sur}$ at a depth position of 30 $\mu$m from the surface to a Vickers hardness [Hv] at a 1/4 depth position of the sheet thickness from the surface, three Vickers hardnesses were measured with a load set to 20 g at the depth position of a sample with an embedded cross section according to JIS Z 2244 (2009), and $Hv_{sur}$/[Hv] was obtained from each average value.

These results are shown in Tables 3-1 to 3-4.

In the tables, a cold-rolled steel sheet that had not been galvanized is indicated as CR, a hot-dip galvanized steel sheet is indicated as GI, and a galvannealed steel sheet is indicated as GA.

[Table 3-1]

| No. | Kind of steel | Steel sheet | Microstructure (1/8 to 3/8 thickness position) | | | | | | Number proportion of residual austenite having aspect ratio of 2.0 or more |
|---|---|---|---|---|---|---|---|---|---|
| | | | Ferrite | Residual austenite | Bainite | Tempered martensite | Fresh martensite | Pearlite | |
| | | | % | % | % | % | % | % | % |
| 1 | A | CR | 21 | 7 | 43 | 26 | 3 | 0 | 72 |
| 2 | A | GA | 26 | 10 | 37 | 22 | 5 | 0 | 65 |
| 3 | A | CR | 23 | **5** | 42 | 15 | **15** | 0 | **35** |
| 4 | A | CR | 27 | **4** | 17 | 29 | **17** | **6** | **45** |
| 5 | A | GA | 25 | **5** | 27 | 24 | **12** | **7** | **48** |
| 6 | B | CR | 18 | 19 | 25 | 36 | 2 | 0 | 75 |
| 7 | B | CR | **55** | **4** | 11 | 15 | **12** | 3 | **25** |
| 8 | B | CR | 33 | 21 | 28 | 15 | 3 | 0 | 68 |
| 9 | B | . | | | | | | | |
| 10 | C | GA | 25 | 10 | 28 | 35 | 2 | 0 | 62 |
| 11 | C | GA | 22 | 7 | 37 | 19 | **13** | 2 | 57 |
| 12 | C | GA | 12 | **5** | 22 | **55** | 5 | 1 | 55 |
| 13 | C | CR | 24 | 10 | 30 | 34 | 2 | 0 | 65 |
| 14 | D | CR | 26 | 21 | 28 | 22 | 2 | 1 | 71 |
| 15 | D | CR | 25 | **5** | 31 | 24 | **12** | 3 | **34** |
| 16 | D | GA | 32 | **5** | 45 | 13 | **9** | 1 | 65 |
| 17 | D | GA | 28 | 18 | 29 | 22 | 1 | 2 | 62 |
| 18 | D | CR | 25 | 14 | 36 | 21 | 3 | 1 | 67 |
| 19 | D | CR | 22 | 15 | 40 | 20 | 2 | 1 | 65 |
| 20 | E | CR | 19 | 22 | 13 | 42 | 4 | 0 | 68 |
| 21 | E | GA | 17 | 21 | 16 | 39 | 5 | 2 | 65 |
| 22 | E | GA | 16 | 8 | 43 | 15 | **15** | 3 | 62 |
| 23 | E | CR | 19 | 9 | 40 | 17 | **13** | 2 | 72 |
| 24 | F | CR | 26 | 14 | 30 | 26 | 3 | 1 | 69 |
| 25 | F | CR | 25 | 8 | 37 | 15 | **12** | 3 | 72 |
| 26 | F | CR | 24 | 12 | 26 | 25 | **11** | 2 | 65 |
| 27 | F | CR | 33 | 12 | 24 | 15 | **13** | 3 | 66 |
| 28 | G | CR | 30 | 16 | 17 | 35 | 2 | 0 | 72 |
| 29 | G | GA | 31 | 14 | 13 | 33 | 6 | 3 | 76 |
| 30 | G | GA | 41 | **5** | 17 | 23 | **12** | 2 | **48** |
| 31 | G | CR | 32 | 6 | 29 | 19 | **11** | 3 | 68 |
| 32 | H | CR | 28 | 18 | 23 | 25 | 4 | 2 | 65 |

Bold underlines indicate outside of the range of the present invention.

[Table 3-2]

| No. | Kind of steel | Steel sheet | Microstructure (1/8 to 3/8 thickness position) | | | | | | Number proportion of residual austenite having aspect ratio of 2.0 or more |
|---|---|---|---|---|---|---|---|---|---|
| | | | Ferrite | Residual austenite | Bainite | Tempered martensite | Fresh martensite | Pearlite | |
| | | | % | % | % | % | % | % | % |
| 33 | I | CR | 29 | 19 | 20 | 27 | 4 | 1 | 69 |
| 34 | J | GI | 22 | 21 | 14 | 35 | 6 | 2 | 68 |
| 35 | K | GA | 31 | 12 | 17 | 34 | 5 | 1 | 65 |
| 36 | K | GA | 30 | 9 | 19 | 39 | 3 | 0 | 62 |
| 37 | L | GA | 32 | 19 | 21 | 25 | 3 | 0 | 79 |
| 38 | M | GI | 22 | 18 | 24 | 34 | 2 | 0 | 68 |
| 39 | M | CR | 21 | **5** | 26 | 31 | **11** | **6** | 72 |
| 40 | M | CR | 35 | **5** | 23 | 22 | **14** | 1 | **45** |
| 41 | N | CR | 23 | 16 | 21 | 33 | 5 | 2 | 71 |
| 42 | N | GA | 19 | 18 | 26 | 31 | 6 | 0 | 65 |
| 43 | N | GA | 23 | **5** | 30 | 21 | **18** | 3 | 65 |
| 44 | **O** | - | - | - | - | - | - | - | - |
| 45 | **P** | CR | 35 | **3** | 12 | 45 | 3 | 2 | **48** |
| 46 | **Q** | GA | 23 | **2** | 34 | 33 | 2 | **6** | **45** |
| 47 | **R** | GA | **62** | **5** | 21 | **3** | 2 | **7** | **44** |
| 48 | **S** | - | - | - | - | - | - | - | - |
| 49 | **T** | - | - | - | - | - | - | - | - |
| 50 | **U** | - | - | - | - | - | - | - | - |
| 51 | **V** | - | - | - | - | - | - | - | - |
| 52 | A | CR | 21 | 6 | 46 | 24 | 3 | 0 | 72 |
| 53 | E | CR | 19 | 29 | 6 | 42 | 4 | 0 | 68 |
| 54 | E | CR | 19 | **32** | **3** | 42 | 4 | 0 | 68 |
| 55 | E | CR | 19 | 27 | 8 | 42 | 4 | 0 | 50 |
| 56 | E | CR | 19 | 25 | 10 | 42 | 4 | 0 | 68 |
| 57 | A | CR | 16 | 6 | 60 | 16 | 2 | 0 | 72 |
| 58 | A | CR | 15 | **5** | **62** | 16 | 2 | 0 | 72 |
| 59 | B | CR | 37 | 23 | 34 | 5 | 1 | 0 | 68 |
| 60 | B | CR | 35 | 22 | 32 | 10 | 1 | 0 | 68 |
| 61 | N | GA | 18 | 17 | 24 | 31 | 10 | 0 | 65 |
| 62 | G | GA | 31 | 14 | 12 | 33 | 6 | 4 | 76 |
| 63 | W | CR | 21 | 7 | 44 | 26 | 2 | 0 | 72 |
| 64 | **X** | GA | **57** | **5** | 26 | **3** | 2 | **7** | **44** |

Bold underlines indicate outside of the range of the present invention.

[Table 3-3]

| No. | Kind of steel | Steel sheet | Inclusions and precipitates — Number density of inclusions and precipitates having grain size of 1 μm or more /mm² | Mn segregation — Average interval between Mn-concentrated portions at 1/20 depth μm | Mn segregation — Standard deviation of Mn concentrations % | Mechanical properties — Press formability — TS MPa | El % | λ % | $TS^* El^* \lambda^{0.5} / 1000$ | Toughness after application of 5% prestrain and heat treatment of 170°C × 20 minutes | Hardness $Hv_{sur} / [Hv]$ | Note |
|---|---|---|---|---|---|---|---|---|---|---|---|---|
| 1 | A | CR | 15 | 220 | 0.21 | 995 | 19.7 | 39 | 122 | G | 0.89 | Example of Present Invention |
| 2 | A | GA | 17 | 200 | 0.19 | 985 | 21.5 | 25 | 106 | VG | 0.76 | Example of Present Invention |
| 3 | A | CR | 19 | 210 | 0.22 | 1052 | 14.0 | 20 | 66 | B | 0.88 | Comparative Example |
| 4 | A | CR | 12 | 205 | 0.19 | 1035 | 14.2 | 18 | 62 | B | 0.91 | Comparative Example |
| 5 | A | GA | 16 | 220 | **0.43** | 1044 | 12.9 | 25 | 67 | B | 0.75 | Comparative Example |
| 6 | B | CR | 12 | 195 | 0.22 | 1055 | 23.5 | 35 | 147 | G | 0.92 | Example of Present Invention |
| 7 | B | CR | 13 | 210 | 0.22 | 975 | 17.2 | 18 | 71 | B | 0.78 | Comparative Example |
| 8 | B | CR | 11 | 190 | 0.18 | 1029 | 24.2 | 21 | 114 | G | 0.91 | Example of Present Invention |
| 9 | B | - | - | - | - | - | - | - | - | - | - | Comparative Example |
| 10 | C | GA | 10 | 210 | 0.24 | 995 | 18.0 | 31 | 100 | VG | 0.76 | Example of Present Invention |
| 11 | C | GA | 9 | 190 | 0.21 | 1045 | 15.0 | 23 | 75 | B | 0.77 | Comparative Example |
| 12 | C | GA | 9 | 185 | 0.20 | 1210 | 11.0 | 35 | 79 | VG | 0.75 | Comparative Example |
| 13 | C | CR | 25 | **315** | **0.45** | 1062 | 17.0 | 18 | 77 | B | 0.92 | Comparative Example |
| 14 | D | CR | 12 | 220 | 0.23 | 1021 | 22.3 | 35 | 135 | VG | 0.76 | Example of Present Invention |
| 15 | D | CR | 9 | 220 | 0.23 | 1055 | 13.2 | 19 | 61 | B | 0.86 | Comparative Example |
| 16 | D | GA | 10 | 205 | 0.21 | 1065 | 14.5 | 16 | 62 | VG | 0.76 | Comparative Example |
| 17 | D | GA | **35** | 225 | 0.23 | 1022 | 21.1 | 19 | 94 | B | 0.77 | Comparative Example |
| 18 | D | CR | **32** | 205 | 0.22 | 998 | 23.2 | 18 | 98 | B | 0.76 | Comparative Example |
| 19 | D | CR | **41** | 185 | 0.18 | 997 | 22.5 | 19 | 98 | B | 0.75 | Comparative Example |
| 20 | E | CR | 12 | 205 | 0.21 | 1210 | 15.2 | 35 | 109 | G | 0.86 | Example of Present Invention |
| 21 | E | GA | 11 | 210 | 0.23 | 1224 | 14.8 | 38 | 112 | VG | 0.79 | Example of Present Invention |
| 22 | E | GA | 12 | 200 | 0.20 | 1294 | 10.2 | 19 | 58 | B | 0.75 | Comparative Example |
| 23 | E | CR | 12 | 205 | **0.42** | 1264 | 10.5 | 21 | 61 | B | 0.82 | Comparative Example |
| 24 | F | CR | 13 | 195 | 0.19 | 985 | 24.1 | 25 | 119 | G | 0.85 | Example of Present Invention |
| 25 | F | CR | 11 | 200 | 0.21 | 1024 | 13.5 | 22 | 65 | B | 0.89 | Comparative Example |
| 26 | F | CR | 13 | 205 | **0.41** | 1055 | 14.5 | 21 | 70 | B | 0.82 | Comparative Example |

| 27 | F | CR | 12 | 210 | 0.42 | 1032 | 13.5 | 26 | 71 | B | 0.88 | Comparative Example |
| 28 | G | CR | 9 | 195 | 0.21 | 998 | 21.6 | 31 | 120 | G | 0.89 | Example of Present Invention |
| 29 | G | GA | 13 | 210 | 0.26 | 1003 | 22.5 | 35 | 134 | VG | 0.75 | Example of Present Invention |
| 30 | G | GA | 10 | 205 | 0.24 | 1051 | 16.1 | 18 | 72 | B | 0.77 | Comparative Example |
| 31 | G | CR | 12 | 210 | **0.43** | 1025 | 15.4 | 19 | 69 | B | 0.86 | Comparative Example |
| 32 | H | CR | 13 | 190 | 0.25 | 1021 | 19.5 | 28 | 105 | VG | 0.75 | Example of Present Invention |

Bold underlines indicate outside of the range of the present invention.

[Table 3-4]

| No. | Kind of steel | Steel sheet | Inclusions and precipitates — Number density of inclusions and precipitates having grain size of 1 μm or more | Mn segregation — Average interval between Mn-concentrated portions at 1/20 depth (μm) | Standard deviation of Mn concentrations (%) | TS (MPa) | El (%) | λ (%) | $TS \times El \times \lambda^{0.5}/1000$ | Toughness after application of 5% prestrain and heat treatment of 170°C × 20 minutes | $Hv_{sur}/[Hv]$ | Note |
|---|---|---|---|---|---|---|---|---|---|---|---|---|
| 33 | I | CR | 12 | 170 | 0.18 | 986 | 24.2 | 35 | 141 | G | 0.88 | Example of Present Invention |
| 34 | J | GI | 11 | 195 | 0.22 | 1195 | 16.2 | 32 | 110 | VG | 0.77 | Example of Present Invention |
| 35 | K | GA | 12 | 205 | 0.18 | 995 | 17.5 | 42 | 113 | VG | 0.79 | Example of Present Invention |
| 36 | K | GA | 11 | 195 | 0.21 | 1020 | 16.8 | 40 | 108 | VG | 0.79 | Example of Present Invention |
| 37 | L | GA | 11 | 210 | 0.21 | 1006 | 24.2 | 35 | 144 | VG | 0.75 | Example of Present Invention |
| 38 | M | GI | 9 | 190 | 0.22 | 1222 | 15.2 | 45 | 125 | VG | 0.77 | Example of Present Invention |
| 39 | M | CR | 10 | 205 | 0.22 | 1105 | 12.2 | 25 | 67 | B | 0.89 | Comparative Example |
| 40 | M | CR | 13 | 210 | 0.22 | 1075 | 10.2 | 22 | 51 | B | 0.88 | Comparative Example |
| 41 | N | CR | 10 | 190 | 0.21 | 1195 | 14.8 | 45 | 119 | VG | 0.77 | Example of Present Invention |
| 42 | N | GA | 9 | 195 | 0.22 | 1203 | 14.9 | 35 | 106 | VG | 0.79 | Example of Present Invention |
| 43 | N | GA | 11 | 210 | 0.22 | 1272 | 11.1 | 32 | 79 | B | 0.75 | Comparative Example |
| 44 | O | - | - | - | - | - | - | - | - | - | - | Comparative Example |
| 45 | P | CR | 12 | 205 | 0.19 | 891 | 16.1 | 30 | 79 | G | 0.89 | Comparative Example |
| 46 | Q | GA | 11 | 200 | 0.18 | 1085 | 11.9 | 32 | 73 | VG | 0.75 | Comparative Example |
| 47 | R | GA | 15 | 195 | 0.16 | 921 | 21.0 | 35 | 114 | VG | 0.77 | Comparative Example |
| 48 | S | - | - | - | - | - | - | - | - | - | - | Comparative Example |
| 49 | T | - | - | - | - | - | - | - | - | - | - | Comparative Example |
| 50 | U | - | - | - | - | - | - | - | - | - | - | Comparative Example |
| 51 | V | - | - | - | - | - | - | - | - | - | - | Comparative Example |
| 52 | A | CR | 15 | 220 | 0.21 | 999 | 19.7 | 39 | 123 | G | 0.89 | Example of Present Invention |
| 53 | E | CR | 12 | 205 | 0.21 | 1212 | 15.4 | 37 | 114 | G | 0.86 | Example of Present Invention |
| 54 | E | CR | 12 | 205 | 0.21 | 1211 | 15.2 | 12 | 64 | B | 0.86 | Comparative Example |
| 55 | E | CR | 12 | 205 | 0.21 | 1215 | 15.9 | 35 | 114 | G | 0.86 | Example of Present Invention |
| 56 | E | CR | 30 | 205 | 0.21 | 1208 | 16.6 | 35 | 119 | G | 0.86 | Example of Present |

| | | | | | | | | | | | | Invention |
|---|---|---|---|---|---|---|---|---|---|---|---|---|
| 57 | A | CR | 15 | 300 | 0.21 | 1003 | 13.8 | 47 | 95 | G | 0.89 | Example of Present Invention |
| 58 | A | CR | 15 | 220 | 0.21 | 980 | 12.8 | 39 | 78 | G | 0.89 | Comparative Example |
| 59 | B | CR | 11 | 190 | 0.35 | 1039 | 24.4 | 28 | 134 | VG | 0.78 | Example of Present Invention |
| 60 | B | CR | 11 | 190 | 0.18 | 1037 | 24.5 | 25 | 127 | VG | 0.77 | Example of Present Invention |
| 61 | N | GA | 9 | 195 | 0.22 | 1208 | 14.9 | 30 | 99 | VG | 0.79 | Example of Present Invention |
| 62 | G | GA | 13 | 210 | 0.26 | 1004 | 22.6 | 37 | 138 | VG | 0.75 | Example of Present Invention |
| 63 | W | CR | 15 | 220 | 0.21 | 992 | 19.7 | 38 | 120 | G | 0.89 | Example of Present Invention |
| 64 | X | GA | 15 | 195 | 0.16 | 920 | 21.6 | 34 | 116 | VG | 0.77 | Comparative Example |

The steel sheets of the examples of the present invention were steel sheets having high strength, a good balance between strength, elongation, and hole expansibility, and little deterioration in Charpy absorbed energy after the plastic deformation (the application of prestrain) and the heat treatment of 170°C × 20 minutes simulating the baking coating.

On the other hand, in comparative examples, steel sheets could not be manufactured, or steel sheets were inferior in any of strength, a balance between strength, elongation, and hole expansibility, and Charpy absorbed energy after the plastic deformation (the application of prestrain) and the heat treatment 170°C × 20 minutes simulating the baking coating.

In Example No. 9, since the solidification rate was high at a position of 10 mm from the surface of the molten steel, and cracks occurred in the slab, steps subsequent to the hot rolling could not be performed.

In Example No. 13, since the solidification rate at a position of 10 mm from the surface of the molten steel was slow, the average interval between the Mn-concentrated portions at the 1/20 depth was wide, and as a result, the standard deviation of the Mn concentrations was high, in addition to the deterioration of the balance of mechanical properties, the deterioration of the Charpy absorbed energy also increased.

In Example No. 18, since the molten steel casting amount per unit time was small, the trapping of inclusions and precipitates in the vicinity of the surface layer of the slab during casting increased, and the Charpy absorbed energy deteriorated.

In Example No. 19, since the molten steel casting amount per unit time was large, the trapping of inclusions and precipitates in the vicinity of the surface layer of the slab due to entrainment of mold powder increased. Therefore, the Charpy absorbed energy deteriorated.

In Example No. 17, since the average cooling rate between the liquidus temperature and the solidus temperature of the surface layer area at a depth position of 5 mm of the molten steel was too low, grain growth of inclusions and precipitates progressed during the solidification process, and the Charpy absorbed energy deteriorated.

In Example No. 23, since the heating rate of the slab from Ac1 to Ac1 + 30°C was too low, distribution of Mn at $\alpha/\gamma$ during an increase in temperature progressed, and the standard deviation of the Mn concentrations increased. As a result, a decrease in martensitic transformation temperature due to partial Mn concentration occurred and the volume fraction of fresh martensite increased. As a result, the balance of mechanical properties deteriorated, and the Charpy absorbed energy also deteriorated.

In Example No. 26, since the slab heating temperature was low, Mn was not sufficiently uniform, and in addition to an increase in the volume fraction of fresh martensite, the standard deviation of the Mn concentrations increased. As a result, the balance of mechanical properties deteriorated, and the Charpy absorbed energy also deteriorated.

In Example No. 27, since the heating time of the slab at 1200°C or higher was short, Mn was not sufficiently uniform and the standard deviation of the Mn concentrations increased. As a result, the balance of mechanical properties deteriorated, and the Charpy absorbed energy also deteriorated.

In Example No. 5, since the coiling temperature in the hot rolling was high, the distribution of Mn progressed in phase transformation after the coiling, and the standard deviation of the Mn concentrations increased. As a result, the balance of mechanical properties deteriorated, and the Charpy absorbed energy also deteriorated.

In Example No. 31, since the average heating rate between Ac1 and Ac1 + 30°C in the first annealing step was low, the standard deviation of the Mn concentrations increased. As a result, the balance of mechanical properties deteriorated, and the Charpy absorbed energy also deteriorated.

In Example No. 15, since the highest heating temperature in the first annealing step was low, the microstructure after the first annealing step did not become a lath-like structure over the entire surface. Therefore, the volume fraction of residual austenite was insufficient and the volume fraction of fresh martensite was increased, which deteriorated the balance of mechanical properties and also deteriorated the Charpy absorbed energy.

In Example No. 30, since the average cooling rate from the highest heating temperature to 650°C in the first annealing step was low, ferritic transformation occurred during cooling, and the microstructure after the first annealing step did not become a lath-like structure over the entire surface. As a result, the balance of mechanical properties deteriorated, and the Charpy absorbed energy also deteriorated.

In Example No. 3, since the cooling stop temperature in the first annealing step was high, a complete lath-like structure could not be obtained during the subsequent holding, and the volume fraction of fresh martensite in the final product increased, or the number proportion of residual austenite having an aspect ratio of 2.0 or more decreased. As a result, the balance of mechanical properties deteriorated, and the Charpy absorbed energy also deteriorated.

In Example Nos. 7 and 40, since the highest heating temperature in the second annealing step was low, the amount of residual austenite from which a final product could be obtained decreased, the balance of mechanical properties deteriorated, and the Charpy absorbed energy also deteriorated.

In Example No. 12, since the highest heating temperature in the second annealing step was high, the lath-like structure formed in the first annealing step collapsed and the desired microstructure could not be obtained. As a result, the balance of mechanical properties deteriorated.

In Example Nos. 11, 22, and 43, since the cooling stop temperature in the second annealing step was high, the volume fraction of tempered martensite decreased. As a result, bainitic transformation did not sufficiently progress during subsequent holding, and the volume fraction of fresh martensite generated after final cooling increased. As a result, the balance of mechanical properties deteriorated, and the Charpy absorbed energy also deteriorated.

In Example Nos. 4 and 39, since the holding temperature after stopping cooling in the soaking step was high, cementite was generated in residual austenite exposed to a high temperature, resulting in instability. Therefore, the volume fraction of residual austenite that could be finally obtained decreased. As a result, the balance of mechanical properties deteriorated, and the Charpy absorbed energy also deteriorated.

In Example Nos. 16 and 25, since the holding temperature after stopping cooling in the soaking step was low, bainitic transformation did not sufficiently progress during holding, and the amount of fresh martensite generated after final cooling increased. As a result, the balance of mechanical properties deteriorated. In Example 25, furthermore, the Charpy absorbed energy also deteriorated.

In Example No. 54, since the holding temperature after stopping cooling in the soaking step was low, the volume fraction of bainite was insufficient. In addition, the volume fraction of residual austenite was also excessive, which deteriorated the balance of mechanical properties.

In Example No. 58, since the holding temperature after stopping cooling in the soaking step was high, bainitic transformation progressed excessively, resulting in an excessive volume fraction of bainite. Therefore, the balance of mechanical properties deteriorated.

In Example No. 44, since the total amount of Si and Al was large, cracks occurred in the slab. Therefore, steps subsequent to the hot rolling could not be performed.

In Example No. 45, since the C content was low, the Ms point did not decrease significantly, and as a result, the volume fraction of residual austenite was small. In addition, the number proportion of residual austenite having an aspect ratio of 2.0 or more was small. Therefore, the balance of mechanical properties deteriorated.

In Example No. 46, since the total amount of Si and Al was small, carbon concentration in untransformed austenite was small. As a result, the volume fraction of residual austenite was small, the volume fraction of pearlite was large, and the number proportion of residual austenite having an aspect ratio 2.0 or more was small. Therefore, the balance of mechanical properties deteriorated.

In Example Nos. 47 and 64, since the Mn content was low, the Ms point did not decrease. As a result, the volume fractions of ferrite and pearlite were large, the volume fractions of residual austenite and tempered martensite were large, and the number proportion of residual austenite having an aspect ratio 2.0 or more was small. Therefore, the tensile strength was insufficient.

In Example No. 48, since the Mn content was high, cracks occurred in the steel sheet during the cold rolling step. Therefore, subsequent steps could not be performed.

In Example No. 49, since the C content was high, cracks occurred in the steel sheet during the cold rolling step. Therefore, subsequent steps could not be performed.

In Example 50, since the Si content was high, cracks occurred in the slab. Therefore, steps subsequent to the hot rolling could not be performed.

In Example No. 51, since the Al content was high, cracks occurred in the slab. Therefore, steps subsequent to the hot rolling could not be performed.

In Example Nos. 2, 10, 14, 21, 29, 32, 34, 35, 36, 37, 38, 41, 42, 61, and 62, since the oxygen potential was high in one or both of the first annealing step or the second annealing step, internal oxidation occurred in the vicinity of the surface layer of the steel sheet, and at the same time, decarburization progressed, resulting in softening. Therefore, the ratio of the Vickers hardness $Hv_{sur}$ at a depth position of 30 $\mu$m from the surface to the Vickers Hardness [Hv] at a 1/4 depth position of the sheet thickness from the surface decreased, and the bendability was improved, so that the Charpy absorbed energy was improved.

(Example 2)

Using the same slab as in Example 1, hot rolling was performed under the conditions shown in Tables 4-1 and 4-2 to manufacture hot-rolled steel sheets. Thereafter, the hot-rolled steel sheets were pickled to remove the scale on the surface. During the hot rolling, rough rolling was performed so that the total rolling reduction at 1050°C or higher became 60% to 90%. Thereafter, under the conditions shown in Tables 4-3 and 4-4, cold rolling, a first annealing step, and a soaking step were performed. Under a condition in which hot-dip galvanizing was performed before the soaking step or after the soaking step, hot-dip galvanizing is described. In addition, some of the hot-rolled steel sheets after the pickling were subjected to cold rolling at a rolling reduction of 2% for shape correction.

[Table 4-1]

| No. | Kind of steel | Casting conditions | | | Hot rolling step | | | | | |
|---|---|---|---|---|---|---|---|---|---|---|
| | | Solidification rate at position of 10 mm from surface of molten steel | Molten steel casting amount per unit time | Average cooling rate between liquidus temperature and solidus temperature of surface layer area at depth position of 5 mm | Average heating rate of slab (Ac1 to Ac1 + 30°C) | Heating temperature of slab | Heating time at 1200°C or higher | Finish rolling end temperature | Average cooling rate to 600°C | Coiling temperature |
| | | °C/min | tons/min | °C/sec | °C/min | °C | min | °C | °C/sec | °C |
| 65 | A | 130 | 2.2 | 20 | 4.5 | 1230 | 85 | 870 | 75 | 380 |
| 66 | A | 130 | 2.4 | 24 | 4.6 | 1235 | 91 | 875 | 85 | 350 |
| 67 | A | 105 | 2.2 | 15 | 4.4 | 1220 | 60 | **830** | 80 | 370 |
| 68 | A | 130 | 3.5 | 12 | 5.1 | 1215 | 55 | 910 | 95 | 380 |
| 69 | A | 130 | 4.1 | 16 | 5.5 | 1225 | 78 | 890 | 70 | 390 |
| 70 | B | 160 | 4.2 | 19 | 5.6 | 1235 | 95 | 870 | 65 | 395 |
| 71 | B | 180 | 3.3 | 18 | 4.8 | 1230 | 80 | 910 | 85 | 355 |
| 72 | B | 170 | 3.4 | 12 | 6.1 | 1220 | 68 | 920 | 95 | **475** |
| 73 | B | **1035** | 2.5 | 21 | - | - | - | - | - | - |
| 74 | C | 110 | 2.4 | 22 | 4.5 | 1215 | 55 | 940 | 70 | 355 |
| 75 | C | 140 | 2.6 | 11 | 4.6 | 1210 | 60 | 935 | 75 | 360 |
| 76 | C | 160 | 2.2 | 8 | 5.1 | 1240 | 120 | 940 | 60 | 355 |
| 77 | C | **90** | 3.1 | 8 | 5.5 | 1230 | 95 | 910 | 80 | 380 |
| 78 | D | 160 | 4.1 | 9 | 5.8 | 1235 | 98 | 890 | 95 | 360 |
| 79 | D | 150 | 3.9 | 10 | 6.3 | 1240 | 105 | 880 | 85 | 320 |
| 80 | D | 130 | 4.0 | 12 | 5.1 | 1240 | 105 | 895 | 100 | 380 |
| 81 | D | 170 | 3.1 | 19 | 4.8 | 1235 | 93 | 905 | 95 | 375 |
| 82 | D | 120 | 2.8 | **3** | 4.9 | 1220 | 65 | 910 | 90 | 380 |
| 83 | D | 110 | **1.8** | 8 | 6.2 | 1220 | 68 | 920 | 80 | 385 |
| 84 | D | 130 | **6.8** | 7 | 6.3 | 1215 | 68 | 915 | 85 | 390 |
| 85 | E | 120 | 2.1 | 7 | 5.4 | 1210 | 45 | 915 | 80 | 370 |
| 86 | E | 150 | 3.3 | 10 | 5.9 | 1205 | 38 | 920 | 85 | 375 |
| 87 | E | 120 | 3.4 | 12 | 4.8 | 1210 | 48 | 890 | 85 | **510** |
| 88 | E | 140 | 3.5 | 14 | 6.7 | 1205 | **17** | 895 | 65 | 350 |
| 89 | F | 110 | 3.6 | 22 | 6.8 | 1210 | 48 | 900 | 75 | 340 |
| 90 | F | 110 | 3.1 | 21 | 5.5 | 1230 | 81 | 905 | 70 | 330 |
| 91 | F | 120 | 4.4 | 13 | 4.6 | 1235 | 90 | 915 | 70 | 290 |
| 92 | F | 130 | 4.5 | 15 | **1.8** | 1240 | 108 | 870 | 75 | 380 |
| 93 | G | 140 | 3.2 | 16 | 5.5 | 1245 | 135 | 905 | 80 | 350 |
| 94 | G | 130 | 3.5 | 22 | 6.8 | 1250 | 105 | 950 | 95 | 360 |
| 95 | G | 120 | 3.8 | 13 | 6.4 | 1245 | 115 | 920 | 90 | 380 |
| 96 | G | 160 | 3.4 | 8 | 5.4 | **1190** | 45 | 915 | 90 | 390 |
| 97 | H | 140 | 3.5 | 11 | 4.5 | 1235 | 85 | 905 | 100 | 375 |
| 98 | I | 150 | 3.4 | 9 | 4.4 | 1230 | 78 | 910 | 95 | 380 |

Bold underlines indicate outside of the range of the present invention.

[Table 4-2]

| No. | Kind of steel | Casting conditions | | | Hot rolling step | | | | | |
|---|---|---|---|---|---|---|---|---|---|---|
| | | Solidification rate at position of 10 mm from surface of molten steel °C/min | Molten steel casting amount per unit time tons/min | Average cooling rate between liquidus temperature and solidus temperature of surface layer area at depth position of 5 mm °C/sec | Average heating rate of slab (Ac1 to Ac1 + 30°C) °C/min | Heating temperature of slab °C | Heating time at 1200°C or higher min | Finish rolling end temperature °C | Average cooling rate to 600°C °C/sec | Coiling temperature °C |
| 99 | J | 130 | 3.3 | 14 | 4.6 | 1250 | 130 | 920 | 100 | 385 |
| 100 | K | 120 | 2.5 | 15 | 4.8 | 1220 | 68 | 935 | 95 | 395 |
| 101 | K | 130 | 3.0 | 12 | 4.6 | 1230 | 75 | 940 | 95 | 360 |
| 102 | L | 120 | 2.5 | 9 | 4.9 | 1225 | 75 | 925 | 85 | 340 |
| 103 | M | 130 | 2.6 | 10 | 5.2 | 1225 | 71 | 930 | 95 | 345 |
| 104 | M | 140 | 3.8 | 15 | 5.6 | 1230 | 90 | 940 | 95 | 345 |
| 105 | M | 130 | 4.1 | 19 | 5.9 | 1255 | 130 | 840 | 95 | 350 |
| 106 | N | 140 | 4.4 | 22 | 5.8 | 1250 | 122 | 925 | 85 | 230 |
| 107 | N | 120 | 2.3 | 11 | 5.7 | 1240 | 105 | 915 | 85 | 225 |
| 108 | N | 130 | 3.3 | 13 | 6.2 | 1250 | 110 | 930 | 65 | 650 |
| 109 | O | 120 | 2.6 | 14 | - | - | - | - | - | - |
| 110 | P | 150 | 3.4 | 13 | 4.5 | 1230 | 80 | 915 | 80 | 230 |
| 111 | Q | 130 | 3.1 | 14 | 4.6 | 1250 | 130 | 920 | 80 | 260 |
| 112 | R | 120 | 2.6 | 21 | 4.8 | 1240 | 105 | 940 | 95 | 315 |
| 113 | S | 120 | 2.5 | 22 | 4.6 | 1245 | 120 | 950 | 80 | 320 |
| 114 | T | 120 | 2.9 | 8 | 4.8 | 1230 | 80 | 920 | 95 | 350 |
| 115 | U | 130 | 2.1 | 7 | - | - | - | - | - | - |
| 116 | V | 140 | 2.5 | 11 | - | - | - | - | - | - |
| 117 | K | 120 | 2.5 | 15 | 4.8 | 1220 | 68 | 935 | 95 | 395 |
| 118 | E | 120 | 2,1 | 7 | 5.4 | 1210 | 45 | 915 | 80 | 370 |

(continued)

[Table 4-2]

| No. | Kind of steel | Casting conditions | | | Hot rolling step | | | | | |
|---|---|---|---|---|---|---|---|---|---|---|
| | | Solidification rate at position of 10 mm from surface of molten steel (°C/min) | Molten steel casting amount per unit time (tons/min) | Average cooling rate between liquidus temperature and solidus temperature of surface layer area at depth position of 5 mm (°C/sec) | Average heating rate of slab (Ac1 to Ac1 + 30°C) (°C/min) | Heating temperature of slab (°C) | Heating time at 1200°C or higher (min) | Finish rolling end temperature (°C) | Average cooling rate to 600°C (°C/sec) | Coiling temperature (°C) |
| 119 | E | 120 | 2.1 | 7 | 5.4 | 1210 | 45 | 915 | 80 | 370 |
| 120 | E | 120 | 2.1 | 7 | 5.4 | 1210 | 45 | 915 | 80 | 370 |
| 121 | E | 120 | 2.1 | 7 | 5.4 | 1210 | 45 | 915 | 80 | 370 |
| 122 | E | 120 | 2.1 | 7 | 5.4 | 1210 | 45 | 915 | 80 | 370 |
| 123 | E | 120 | 2.1 | 7 | 5.4 | 1210 | 45 | 915 | 80 | 370 |
| 124 | B | 160 | 4.2 | 19 | 5.6 | 1235 | 95 | 870 | 65 | 395 |
| 125 | B | 160 | 4.2 | 19 | 5.6 | 1235 | 95 | 870 | 65 | 395 |
| 126 | M | 130 | 2.6 | 10 | 5.2 | 1225 | 71 | 930 | 95 | 345 |
| 127 | M | 130 | 2.6 | 10 | 5.2 | 1225 | 71 | 930 | 95 | 345 |
| 128 | J | 130 | 3.3 | 14 | 4.6 | 1250 | 130 | 920 | 100 | 385 |
| 129 | G | 130 | 3.5 | 22 | 6.8 | 1250 | 105 | 950 | 95 | 360 |
| 130 | W | 130 | 2.3 | 20 | 4.5 | 1231 | 85 | 870 | 75 | 380 |
| 131 | R | 120 | 2.7 | 21 | 4.8 | 1241 | 105 | 940 | 95 | 315 |

Bold underlines indicate outside of the range of the present invention.

[Table 4-3]

| No. | Kind of steel | Cold rolling step | First annealing step | | | Soaking step | | Atmosphere in heating furnace | Hot-dip galvanizing | Note |
|---|---|---|---|---|---|---|---|---|---|---|
| | | Cold rolling ratio | Heating | | Cooling | Holding temperature after stopping cooling | Holding time after stopping cooling | First annealing step | Hot-dip galvanizing before soaking step or after soaking step | |
| | | | Highest heating temperature | Holding time between Ac1 + 20°C and Ac3°C | Cooling stop temperature of cooling from highest heating temperature | | | log (PH$_2$O/H$_2$) | | |
| | | % | °C | sec | °C | °C | sec | | | |
| 65 | A | 24 | 795 | 210 | 230 | 380 | 250 | -1.77 | - | Example of Present Invention |
| 66 | A | 24 | 770 | 225 | 225 | 385 | 255 | -0.75 | Hot-dip galvanizing | Example of Present Invention |
| 67 | A | 21 | 770 | 230 | 210 | 360 | 350 | -1.66 | Hot-dip galvanizing | Comparative Example |
| 68 | A | 22 | **850** | 210 | 235 | 365 | 320 | -0.72 | - | Comparative Example |
| 69 | A | 18 | 775 | 205 | **290** | 370 | 315 | -0.73 | - | Comparative Example |
| 70 | B | 24 | 790 | 195 | 205 | 410 | 290 | -0.74 | - | Example of Present Invention |
| 71 | B | 15 | 780 | 190 | 210 | 430 | 285 | -1.71 | - | Example of Present Invention |
| 72 | B | 21 | 790 | 180 | 220 | 425 | 265 | -0.73 | Hot-dip galvanizing | Comparative Example |
| 73 | B | - | - | - | - | - | - | - | - | Comparative Example |
| 74 | C | 22 | 760 | 210 | 240 | 415 | 150 | -0.73 | Hot-dip galvanizing | Example of Present Invention |
| 75 | C | 16 | 785 | 188 | 210 | 380 | 180 | -0.72 | Hot-dip galvanizing | Example of Present Invention |
| 76 | C | 14 | **700** | 185 | 235 | 395 | 165 | -0.75 | Hot-dip galvanizing | Comparative Example |
| 77 | C | 22 | 790 | 190 | 210 | 380 | 315 | -0.73 | Hot-dip galvanizing | Comparative Example |
| 78 | D | 24 | 820 | 205 | 235 | 375 | 320 | -1.71 | - | Example of Present Invention |
| 79 | D | **40** | 825 | 201 | 240 | 385 | 300 | -1.65 | - | Comparative Example |
| 80 | D | 17 | 810 | 250 | 215 | 375 | 280 | -0.74 | Hot-dip galvanizing | Example of Present Invention |
| 81 | D | 22 | 810 | 280 | 195 | **480** | 215 | -1.65 | - | Comparative Example |
| 82 | D | 23 | 775 | 275 | 185 | 395 | 150 | -1.61 | - | Comparative Example |
| 83 | D | 25 | 790 | 265 | 205 | 410 | 220 | -1.71 | - | Comparative Example |
| 84 | D | 19 | 765 | 255 | 200 | 385 | 145 | -0.73 | Hot-dip galvanizing | Comparative Example |

| 85 | E | 18 | 790 | 260 | 175 | 375 | 150 | -0.72 | Hot-dip galvanizing | Example of Present Invention |
|---|---|---|---|---|---|---|---|---|---|---|
| 86 | E | 16 | 795 | 195 | 215 | 380 | 180 | -0.71 | " | Example of Present Invention |
| 87 | E | 24 | 780 | 185 | 220 | 390 | 255 | -1.71 | " | Comparative Example |
| 88 | E | 25 | 810 | 195 | 235 | 395 | 265 | -1.65 | " | Comparative Example |
| 89 | F | 22 | 815 | 210 | 240 | 415 | 260 | -0.69 | Hot-dip galvanizing | Example of Present Invention |
| 90 | F | 17 | 805 | 225 | 235 | **240** | 270 | -0.71 | Hot-dip galvanizing | Comparative Example |
| 91 | F | 12 | 810 | 230 | 220 | 410 | 280 | -1.65 | " | Example of Present Invention |
| 92 | F | 22 | 805 | 165 | 225 | 400 | 290 | -0.75 | " | Comparative Example |
| 93 | G | - | 790 | 160 | 225 | 390 | 215 | -1.72 | " | Example of Present Invention |
| 94 | G | 24 | 795 | 195 | 210 | 395 | 205 | -0.77 | Hot-dip galvanizing | Example of Present Invention |
| 95 | G | 18 | **860** | 185 | 230 | 380 | 200 | -0.76 | Hot-dip galvanizing | Comparative Example |
| 96 | G | 22 | 810 | 210 | 240 | 375 | 195 | -0.74 | Hot-dip galvanizing | Comparative Example |
| 97 | H | 17 | 805 | 225 | 240 | 390 | 180 | -1.71 | " | Example of Present Invention |
| 98 | I | 16 | 780 | 230 | 225 | 365 | 170 | -0.74 | Hot-dip galvanizing | Example of Present Invention |

Bold underlines indicate outside of the range of the present invention.

[Table 4-4]

| No. | Kind of steel | Cold rolling step — Cold rolling ratio (%) | First annealing step — Heating — Highest heating temperature (°C) | First annealing step — Heating — Holding time between Ac1 + 20°C and Ac3°C (sec) | First annealing step — Cooling — Cooling stop temperature of cooling from highest heating temperature (°C) | Soaking step — Holding temperature after stopping cooling (°C) | Soaking step — Holding time after stopping cooling (sec) | Atmosphere in heating furnace — First annealing step log$(P_{H_2O}/H_2)$ | Hot-dip galvanizing — Hot-dip galvanizing before soaking step or after soaking step | Note |
|---|---|---|---|---|---|---|---|---|---|---|
| 99 | J | 23 | 785 | 228 | 235 | 410 | 260 | -0.76 | - | Example of Present Invention |
| 100 | K | 22 | 795 | 240 | 240 | 405 | 290 | -0.72 | Hot-dip galvanizing | Example of Present Invention |
| 101 | K | 21 | 800 | 230 | 250 | 300 | 550 | -0.68 | Hot-dip galvanizing | Example of Present Invention |
| 102 | L | 24 | 780 | 235 | 225 | 395 | 340 | -1.69 | - | Example of Present Invention |
| 103 | M | 22 | 810 | 210 | 215 | 355 | 355 | -0.71 | - | Example of Present Invention |
| 104 | M | 16 | 795 | 225 | 205 | 375 | 215 | -0.73 | Hot-dip galvanizing | Example of Present Invention |
| 105 | M | 18 | 800 | 230 | 200 | 355 | 220 | -0.76 | Hot-dip galvanizing | Comparative Example |
| 106 | N | 22 | 795 | 290 | 195 | 375 | 280 | -0.76 | Hot-dip galvanizing | Example of Present Invention |
| 107 | N | 21 | 810 | 280 | 180 | **220** | 250 | -0.75 | - | Comparative Example |
| 108 | N | 14 | 805 | 240 | 185 | 385 | 240 | -0.76 | - | Comparative Example |
| 109 | O | - | - | - | - | - | - | - | - | Comparative Example |
| 110 | P | 19 | 805 | 210 | 200 | 380 | 250 | -0.74 | Hot-dip galvanizing | Comparative Example |
| 111 | Q | 23 | 790 | 195 | 205 | 375 | 280 | -0.74 | - | Comparative Example |
| 112 | R | 21 | 790 | 185 | 215 | 360 | 220 | -0.72 | Hot-dip galvanizing | Comparative Example |
| 113 | S | 22 | - | - | - | - | - | - | - | Comparative Example |
| 114 | T | 19 | - | - | - | - | - | - | - | Comparative Example |
| 115 | U | - | - | - | - | - | - | - | - | Comparative Example |
| 116 | V | - | - | - | - | - | - | - | - | Comparative Example |
| 117 | K | 22 | 795 | 241 | 241 | 406 | 291 | -0.72 | Hot-dip galvanizing | Example of Present Invention |
| 118 | E | 18 | 790 | 263 | 176 | 376 | 151 | -0.72 | Hot-dip galvanizing | Example of Present Invention |
| 119 | E | 18 | 790 | 267 | 155 | 243 | 153 | -0.72 | Hot-dip galvanizing | Comparative Example |
| 120 | E | 18 | 790 | 263 | 176 | 270 | 151 | -0.72 | Hot-dip galvanizing | Example of Present Invention |

| 121 | E | 18 | 790 | 263 | 176 | 245 | 154 | -0.72 | Hot-dip galvanizing | Comparative Example |
|-----|---|----|-----|-----|-----|-----|-----|-------|---------------------|---------------------|
| 122 | E | 18 | 790 | 262 | 178 | 377 | 157 | -0.72 | Hot-dip galvanizing | Example of Present Invention |
| 123 | E | 18 | 790 | 261 | 181 | 376 | 160 | -0.72 | Hot-dip galvanizing | Example of Present Invention |
| 124 | B | 24 | 790 | 195 | 205 | 440 | 990 | -0.74 | - | Example of Present Invention |
| 125 | B | 24 | 790 | 195 | 205 | **463** | **1012** | -0.74 | - | Comparative Example |
| 126 | M | 22 | 810 | 209 | 215 | 355 | 356 | -0.71 | - | Example of Present Invention |
| 127 | M | 22 | 810 | 208 | 215 | 357 | 355 | -0.71 | - | Example of Present Invention |
| 128 | J | 23 | 786 | 228 | 222 | 410 | 260 | -0.76 | - | Example of Present Invention |
| 129 | G | 24 | 795 | 193 | 211 | 395 | 205 | -0.77 | Hot-dip galvanizing | Example of Present Invention |
| 130 | W | 24 | 794 | 210 | 230 | 380 | 251 | -1.77 | - | Example of Present Invention |
| 131 | **R** | 21 | 789 | 185 | 215 | 360 | 221 | -0.72 | Hot-dip galvanizing | Comparative Example |

Bold underlines indicate outside of the range of the present invention.

Tables 5-1 to 5-4 show the results of examining the steel sheets manufactured under the above conditions under the same conditions as in Example 1.

[Table 5-1]

| No. | Kind of steel | Plating | Microstructure (1/8 to 3/8 thickness position) | | | | | | |
|---|---|---|---|---|---|---|---|---|---|
| | | | Ferrite | Residual austenite | Bainite | Tempered martensite | Fresh martensite | Pearlite | Number proportion of residual austenite having aspect ratio of 2.0 or more |
| | | | % | % | % | % | % | % | % |
| 65 | A | CR | 20 | 14 | 34 | 28 | 3 | 1 | 77 |
| 66 | A | GA | 28 | 13 | 30 | 26 | 2 | 1 | 65 |
| 67 | A | GA | 30 | **5** | 26 | 25 | **12** | 2 | **32** |
| 68 | A | CR | 4 | **5** | 53 | 25 | **11** | 2 | **29** |
| 69 | A | CR | 24 | 8 | 51 | **2** | **14** | 1 | **45** |
| 70 | B | CR | 16 | 22 | 17 | 42 | 3 | 0 | 65 |
| 71 | B | CR | 17 | 20 | 20 | 40 | 2 | 1 | 62 |
| 72 | B | GA | 20 | 8 | 39 | 15 | **12** | **6** | **35** |
| 73 | B | - | - | - | - | - | - | - | - |
| 74 | C | GA | 23 | 12 | 38 | 25 | 2 | 0 | 66 |
| 75 | C | GA | 21 | 13 | 33 | 32 | 1 | 0 | 63 |
| 76 | C | GA | 45 | **4** | 29 | 6 | **13** | 3 | **15** |
| 77 | C | GA | 23 | 9 | 29 | 36 | 3 | 0 | 62 |
| 78 | D | CR | 25 | 19 | 25 | 25 | 5 | 1 | 74 |
| 79 | D | CR | 20 | 17 | 30 | 26 | 4 | 3 | **35** |
| 80 | D | GA | 35 | 19 | 13 | 31 | 2 | 0 | 73 |
| 81 | D | CR | 32 | **5** | 19 | 32 | 6 | **6** | 62 |
| 82 | D | CR | 31 | 18 | 26 | 22 | 2 | 1 | 68 |
| 83 | D | CR | 21 | 16 | 37 | 22 | 3 | 1 | 66 |
| 84 | D | GA | 22 | 14 | 36 | 21 | 5 | 2 | 67 |
| 85 | E | GI | 16 | 23 | 19 | 38 | 3 | 1 | 71 |
| 86 | E | CR | 15 | 20 | 26 | 35 | 3 | 1 | 67 |
| 87 | E | CR | 16 | 12 | 34 | 25 | **11** | 2 | **32** |
| 88 | E | CR | 19 | 14 | 21 | 32 | **12** | 2 | **35** |
| 89 | F | GA | 24 | 11 | 29 | 30 | 5 | 1 | 72 |
| 90 | F | GA | 22 | **5** | 27 | 35 | 9 | 2 | 69 |
| 91 | F | CR | 25 | 12 | 28 | 31 | 3 | 1 | 65 |
| 92 | F | CR | 21 | 11 | 29 | 25 | **13** | 1 | 71 |
| 93 | G | CR | 33 | 16 | 26 | 21 | 3 | 1 | 69 |
| 94 | G | GA | 31 | 13 | 24 | 26 | 4 | 2 | 67 |
| 95 | G | GA | 15 | **5** | 23 | **52** | 3 | 2 | **31** |
| 96 | G | GI | 41 | 12 | 10 | 28 | 8 | 1 | 68 |
| 97 | H | CR | 22 | 14 | 28 | 31 | 4 | 1 | 72 |
| 98 | I | GA | 29 | 18 | 18 | 32 | 2 | 1 | 75 |

Bold underlines indicate outside of the range of the present invention.

[Table 5-2]

| No. | Kind of steel | Plating | Microstructure (1/8 to 3/8 thickness position) | | | | | | Number proportion of residual austenite having aspect ratio of 2.0 or more |
| | | | Ferrite | Residual austenite | Bainite | Tempered martensite | Fresh martensite | Pearlite | |
| | | | % | % | % | % | % | % | % |
| 99 | J | CR | 24 | 21 | 13 | 35 | 5 | 2 | 72 |
| 100 | K | GA | 29 | 9 | 21 | 35 | 4 | 2 | 65 |
| 101 | K | GA | 27 | 8 | 23 | 37 | 5 | 0 | 68 |
| 102 | L | CR | 25 | 22 | 23 | 26 | 3 | 1 | 64 |
| 103 | M | CR | 22 | 19 | 33 | 23 | 2 | 1 | 66 |
| 104 | M | GA | 21 | 18 | 32 | 25 | 3 | 1 | 68 |
| 105 | M | GA | 31 | **5** | 26 | 15 | **21** | 2 | **43** |
| 106 | N | GA | 22 | 16 | 35 | 28 | 3 | 1 | 77 |
| 107 | N | CR | 23 | 8 | 36 | 20 | **12** | 1 | 73 |
| 108 | N | CR | 21 | **5** | 35 | 22 | **11** | **6** | **46** |
| 109 | O | - | - | - | - | - | - | - | - |
| 110 | **P** | GA | 35 | **3** | 12 | 45 | 3 | 2 | **46** |
| 111 | Q | CR | 22 | **3** | 53 | 22 | 0 | 0 | **44** |
| 112 | **R** | GA | **59** | **5** | 23 | **3** | 2 | **8** | **46** |
| 113 | **S** | - | - | - | - | - | - | - | - |
| 114 | T | - | - | - | - | - | - | - | - |
| 115 | **U** | - | - | - | - | - | - | - | - |
| 116 | V | - | - | - | - | - | - | - | - |
| 117 | K | GA | 29 | 6 | 24 | 35 | 4 | 2 | 65 |
| 118 | E | GI | 16 | 29 | 13 | 38 | 3 | 1 | 71 |
| 119 | E | GI | 19 | **32** | **4** | 41 | 3 | 1 | 71 |
| 120 | E | GI | 19 | 29 | 6 | 40 | 4 | 2 | 71 |
| 121 | E | GI | 20 | 29 | **4** | 40 | 4 | 2 | 71 |
| 122 | E | GI | 19 | 22 | 8 | 45 | 4 | 2 | 50 |
| 123 | E | GI | 14 | 21 | 10 | 49 | 4 | 2 | 71 |
| 124 | B | CR | 10 | 16 | 59 | 12 | 3 | 0 | 65 |
| 125 | B | CR | 10 | 14 | **62** | 11 | 3 | 0 | 65 |
| 126 | M | CR | 30 | 27 | 36 | 5 | 1 | 1 | 66 |
| 127 | M | CR | 29 | 24 | 35 | 10 | 1 | 1 | 66 |
| 128 | J | CR | 23 | 19 | 11 | 35 | 10 | 2 | 72 |
| 129 | G | GA | 31 | 13 | 22 | 26 | 4 | 4 | 67 |
| 130 | W | CR | 20 | 14 | 35 | 28 | 2 | 1 | 77 |
| 131 | **R** | GA | **53** | **5** | 29 | **3** | 2 | **8** | **46** |

Bold underlines indicate outside of the range of the present invention.

[Table 5-3]

| No. | Kind of steel | Plating | Number density of inclusions and precipitates having grain size of 1 µm or more | Average interval between Mn-concentrated portions at 1/20 thickness position (µm) | Standard deviation of Mn concentrations (%) | TS (MPa) | El (%) | λ (%) | TS*El*λ^0.5/1000 | Toughness after application of 5% prestrain and heat treatment of 170°C × 20 minutes | Hv_sur/[Hv] | Note |
|---|---|---|---|---|---|---|---|---|---|---|---|---|
| 65 | A | CR | 15 | 220 | 0.21 | 1015 | 19.2 | 43 | 128 | G | 0.92 | Example of Present Invention |
| 66 | A | GA | 17 | 200 | 0.19 | 1002 | 22.1 | 23 | 106 | VG | 0.75 | Example of Present Invention |
| 67 | A | GA | 19 | 210 | 0.22 | 1043 | 13.5 | 25 | 70 | B | 0.89 | Comparative Example |
| 68 | A | CR | 12 | 205 | 0.19 | 1051 | 12.9 | 20 | 61 | B | 0.91 | Comparative Example |
| 69 | A | CR | 16 | 220 | 0.43 | 1072 | 11.5 | 32 | 70 | B | 0.76 | Comparative Example |
| 70 | B | CR | 12 | 195 | 0.22 | 1035 | 21.5 | 31 | 124 | VG | 0.75 | Example of Present Invention |
| 71 | B | CR | 13 | 210 | 0.22 | 1025 | 22.1 | 30 | 123 | G | 0.95 | Example of Present Invention |
| 72 | B | GA | 11 | 190 | 0.18 | 1051 | 13.5 | 25 | 71 | B | 0.91 | Comparative Example |
| 73 | B | - | - | - | - | - | - | - | - | - | - | Comparative Example |
| 74 | C | GA | 10 | 210 | 0.24 | 989 | 19.2 | 25 | 95 | VG | 0.78 | Example of Present Invention |
| 75 | C | GA | 9 | 190 | 0.21 | 1010 | 18.9 | 35 | 113 | VG | 0.76 | Example of Present Invention |
| 76 | C | GA | 9 | 185 | 0.20 | 982 | 19.0 | 18 | 79 | B | 0.86 | Comparative Example |
| 77 | C | GA | 25 | **315** | **0.45** | 1010 | 19.0 | 17 | 79 | B | 0.75 | Comparative Example |
| 78 | D | CR | 12 | 220 | 0.23 | 1015 | 22.4 | 31 | 127 | G | 0.89 | Example of Present Invention |
| 79 | D | CR | 8 | 220 | 0.24 | 1025 | 19.2 | 18 | 83 | G | 0.85 | Comparative Example |
| 80 | D | GA | 9 | 220 | 0.23 | 1020 | 23.4 | 31 | 133 | VG | 0.75 | Example of Present Invention |
| 81 | D | CR | 10 | 205 | 0.21 | 1062 | 13.5 | 25 | 72 | G | 0.84 | Comparative Example |
| 82 | D | CR | **35** | 225 | 0.23 | 1015 | 21.5 | 21 | 100 | B | 0.87 | Comparative Example |
| 83 | D | CR | **32** | 205 | 0.22 | 1008 | 22.1 | 23 | 107 | B | 0.89 | Comparative Example |
| 84 | D | GA | **41** | 185 | 0.18 | 1007 | 21.3 | 21 | 98 | B | 0.79 | Comparative Example |
| 85 | E | GI | 12 | 205 | 0.21 | 1195 | 14.5 | 38 | 107 | VG | 0.79 | Example of Present Invention |
| 86 | E | CR | 11 | 210 | 0.23 | 1205 | 14.2 | 41 | 110 | VG | 0.78 | Example of Present Invention |
| 87 | E | CR | 12 | 200 | 0.20 | 1292 | 11.5 | 25 | 74 | B | 0.89 | Comparative Example |
| 88 | E | CR | 12 | 205 | **0.41** | 1312 | 9.5 | 26 | 64 | B | 0.85 | Comparative Example |
| 89 | F | GA | 13 | 195 | 0.19 | 1011 | 19.2 | 45 | 130 | VG | 0.77 | Example of Present Invention |
| 90 | F | GA | 11 | 200 | 0.21 | 1044 | 12.1 | 33 | 73 | B | 0.76 | Comparative Example |
| 91 | F | CR | 13 | 205 | 0.35 | 1012 | 19.8 | 26 | 102 | G | 0.88 | Example of Present Invention |

| 92 | F | CR | 12 | 210 | **0.42** | 1035 | 13.2 | 25 | 68 | B | 0.76 | Comparative Example |
| 93 | G | CR | 9 | 195 | 0.21 | 1003 | 22.3 | 24 | 110 | G | 0.87 | Example of Present Invention |
| 94 | G | GA | 13 | 210 | 0.26 | 1011 | 23.1 | 25 | 117 | VG | 0.76 | Example of Present Invention |
| 95 | G | GA | 10 | 205 | 0.24 | 1105 | 10.5 | 35 | 69 | B | 0.77 | Comparative Example |
| 96 | G | GI | 12 | 210 | **0.41** | 1031 | 18.5 | 31 | 106 | B | 0.75 | Comparative Example |
| 97 | H | CR | 13 | 190 | 0.25 | 1041 | 17.8 | 29 | 100 | G | 0.83 | Example of Present Invention |
| 98 | I | GA | 12 | 170 | 0.18 | 1006 | 24.2 | 36 | 146 | VG | 0.76 | Example of Present Invention |

Bold underlines indicate outside of the range of the present invention.

[Table 5-4]

| No. | Kind of steel | Plating | Inclusions and precipitates — Number density of inclusions and precipitates having grain size of 1 μm or more (μm) | Mn segregation — Average interval between Mn-concentrated portions at 1/20 thickness position (μm) | Standard deviation of Mn concentrations (%) | Mechanical properties — Press formability — TS (MPa) | El (%) | λ (%) | $TS^* El^* \lambda^{0.5}/1000$ | Toughness after application of 5% prestrain and heat treatment of 170°C × 20 minutes | Hardness — $Hv_{sur}$ / [Hv] | Note |
|---|---|---|---|---|---|---|---|---|---|---|---|---|
| 99 | J | CR | 11 | 195 | 0.22 | 1215 | 14.8 | 35 | 106 | VG | 0.78 | Example of Present Invention |
| 100 | K | GA | 12 | 205 | 0.18 | 993 | 17.9 | 35 | 105 | VG | 0.75 | Example of Present Invention |
| 101 | K | GA | 13 | 200 | 0.17 | 1005 | 17.1 | 32 | 97 | VG | 0.72 | Example of Present Invention |
| 102 | L | CR | 11 | 210 | 0.21 | 1020 | 24.2 | 31 | 137 | G | 0.85 | Example of Present Invention |
| 103 | M | CR | 9 | 190 | 0.22 | 1215 | 16.2 | 38 | 121 | VG | 0.76 | Example of Present Invention |
| 104 | M | GA | 10 | 205 | 0.22 | 1209 | 15.4 | 39 | 116 | VG | 0.77 | Example of Present Invention |
| 105 | M | GA | 13 | 210 | 0.22 | 1276 | 11.5 | 25 | 73 | B | 0.76 | Comparative Example |
| 106 | N | GA | 10 | 190 | 0.21 | 1201 | 14.1 | 43 | 111 | VG | 0.74 | Example of Present Invention |
| 107 | N | CR | 9 | 195 | 0.22 | 1274 | 12.1 | 25 | 77 | B | 0.77 | Comparative Example |
| 108 | N | CR | 11 | 210 | 0.22 | 1254 | 11.5 | 25 | 72 | B | 0.88 | Comparative Example |
| 109 | O | - | - | - | - | - | - | - | - | - | - | Comparative Example |
| 110 | P | GA | 12 | 205 | 0.19 | 885 | 14.2 | 35 | 74 | VG | 0.76 | Comparative Example |
| 111 | Q | CR | 11 | 200 | 0.18 | 1021 | 11.2 | 31 | 64 | G | 0.88 | Comparative Example |
| 112 | R | GA | 15 | 195 | 0.16 | 911 | 16.5 | 33 | 86 | VG | 0.77 | Comparative Example |
| 113 | S | - | - | - | - | - | - | - | - | - | - | Comparative Example |
| 114 | T | - | - | - | - | - | - | - | - | - | - | Comparative Example |
| 115 | U | - | - | - | - | - | - | - | - | - | - | Comparative Example |
| 116 | V | - | - | - | - | - | - | - | - | - | - | Comparative |

| 117 | K | GA | 12 | 205 | 0.18 | 996 | 17.5 | 35 | 103 | VG | 0.75 | Example of Present Invention |
|---|---|---|---|---|---|---|---|---|---|---|---|---|
| 118 | E | GI | 12 | 205 | 0.21 | 1197 | 15.1 | 36 | 108 | VG | 0.79 | Example of Present Invention |
| 119 | E | GI | 12 | 205 | 0.21 | 1197 | 14.6 | 18 | 74 | B | 0.79 | Comparative Example |
| 120 | E | GI | 12 | 205 | 0.21 | 1205 | 13.9 | 31 | 93 | VG | 0.79 | Example of Present Invention |
| 121 | E | GI | 12 | 205 | 0.21 | 1175 | 12.9 | 27 | 79 | B | 0.79 | Comparative Example |
| 122 | E | GI | 12 | 205 | 0.21 | 1206 | 14.3 | 32 | 98 | VG | 0.79 | Example of Present Invention |
| 123 | E | GI | 30 | 205 | 0.21 | 1203 | 14.1 | 33 | 97 | VG | 0.79 | Example of Present Invention |
| 124 | B | CR | 9 | 300 | 0.22 | 1037 | 15.0 | 35 | 92 | VG | 0.75 | Example of Present Invention |
| 125 | B | CR | 13 | 195 | 0.26 | 1036 | 13.5 | 32 | 79 | B | 0.75 | Comparative Example |
| 126 | M | CR | 9 | 190 | 0.35 | 1225 | 16.0 | 43 | 129 | VG | 0.76 | Example of Present Invention |
| 127 | M | CR | 9 | 190 | 0.22 | 1222 | 15.9 | 45 | 130 | VG | 0.76 | Example of Present Invention |
| 128 | J | CR | 11 | 195 | 0.22 | 1219 | 14.7 | 30 | 98 | VG | 0.78 | Example of Present Invention |
| 129 | G | GA | 13 | 210 | 0.26 | 1012 | 23.2 | 26 | 120 | VG | 0.76 | Example of Present Invention |
| 130 | W | CR | 15 | 220 | 0.21 | 1013 | 19.3 | 42 | 127 | G | 0.92 | Example of Present Invention |
| 131 | R | GA | 15 | 195 | 0.16 | 910 | 16.2 | 34 | 86 | VG | 0.77 | Comparative Example |

The steel sheets of the examples of the present invention were steel sheets having high strength, a good balance between strength, elongation, and hole expansibility, and little deterioration in Charpy absorbed energy after plastic deformation and 170°C × 20 minutes simulating baking coating.

In Example No. 73, since the solidification rate was high at a position of 10 mm from the surface of the molten steel, and cracks occurred in the slab, steps subsequent to the hot rolling could not be performed.

In Example No. 77, since the solidification rate at a position of 10 mm from the surface of the molten steel was slow, the average interval between the Mn-concentrated portions at the 1/20 thickness position was wide, and as a result, the standard deviation of the Mn concentrations in residual austenite was high. Therefore, in addition to the deterioration of the balance of mechanical properties, the deterioration of the Charpy absorbed energy also increased.

In Example 83, since the molten steel casting amount per unit time was small, the trapping of inclusions and precipitates in the vicinity of the surface layer of the slab during casting increased. Therefore, the Charpy absorbed energy deteriorated.

In Example No. 84, since the molten steel casting amount per unit time was large, the trapping of inclusions and precipitates in the vicinity of the surface layer of the slab due to entrainment of mold powder increased. Therefore, the Charpy absorbed energy deteriorated.

In Example 82, since the average cooling rate between the liquidus temperature and the solidus temperature of the surface layer area at a depth position of 5 mm of the molten steel was too low, grain growth of inclusions and precipitates progressed during the solidification process, and the Charpy absorbed energy deteriorated.

In Example 92, since the heating rate of the slab from Ac1 to Ac1 + 30°C was too low, distribution of Mn at $\alpha/\gamma$ during an increase in temperature progressed, and the standard deviation of the Mn concentrations in residual austenite increased. As a result, a decrease in martensitic transformation temperature due to partial Mn concentration occurred and the volume fraction of fresh martensite increased. As a result, the balance of mechanical properties deteriorated, and the Charpy absorbed energy also deteriorated.

In Example No. 96, since the slab heating temperature was low, Mn was not sufficiently uniform, and the standard deviation of the Mn concentrations in residual austenite increased. As a result, the Charpy absorbed energy deteriorated.

In Example No. 88, since the heating time of the slab at 1200°C or higher was short, Mn was not sufficiently uniform and the standard deviation of the Mn concentrations in residual austenite increased. As a result, the balance of mechanical properties deteriorated, and the Charpy absorbed energy also deteriorated.

In Example 67 and 105, since the finishing temperature in the hot rolling was low, a dislocation density in austenite immediately after the hot rolling increased and ferritic transformation was promoted. Therefore, a lath-like structure could not be obtained on the entire surface in the microstructure after the hot rolling. As a result, the volume fraction of residual austenite was insufficient or the volume fraction of fresh martensite was increased, which deteriorated the balance of mechanical properties and also deteriorated the Charpy absorbed energy.

In Example Nos. 72, 87, and 108, since the coiling temperature in the hot rolling was high, ferrite was generated by phase transformation after the coiling. Therefore, a lath-like structure could not be obtained on the entire surface in the microstructure after the hot rolling. As a result, the volume fraction of fresh martensite increased, so that the balance of mechanical properties deteriorated, and the Charpy absorbed energy also deteriorated.

In Example No. 79, the number proportion of residual austenite having an aspect ratio of 2.0 or more decreased due to the high rolling reduction. As a result, the Charpy absorbed energy deteriorated.

In Example No. 76, since the highest heating temperature in the first annealing step was low, the amount of residual austenite finally obtained in the product decreased, the balance of mechanical properties deteriorated, and the Charpy absorbed energy also deteriorated.

In Example Nos. 68 and 95, since the highest heating temperature in the first annealing step was high, the lath-like structure formed in the hot rolling step collapsed, and the number proportion of residual austenite having an aspect ratio of 2.0 or more decreased. As a result, the balance of mechanical properties deteriorated, and the Charpy absorbed energy also deteriorated.

In Example No. 69, since the cooling stop temperature in the first annealing step was high, the volume fraction of tempered martensite decreased. As a result, bainitic transformation did not sufficiently progress during subsequent holding, and the volume fraction of fresh martensite generated after final cooling increased. As a result, the balance of mechanical properties deteriorated, and the Charpy absorbed energy also deteriorated.

In Example No. 81, since the holding temperature after stopping cooling in the soaking step was high, cementite was generated in residual austenite exposed to a high temperature, resulting in instability. Therefore, the volume fraction of residual austenite that could be finally obtained decreased. As a result, the balance of mechanical properties deteriorated.

In Example Nos. 90 and 107, since the holding temperature after stopping cooling in the soaking step was low, bainitic transformation did not sufficiently progress during holding, and the amount of fresh martensite generated after final cooling increased. As a result, the balance of mechanical properties deteriorated, and the Charpy absorbed energy also deteriorated.

In Example No. 119, since the holding temperature after stopping cooling in the soaking step was low, the volume fraction of bainite was insufficient. In addition, the volume fraction of residual austenite was also excessive, which deteriorated the balance of mechanical properties.

In Example No. 121, since the holding temperature after stopping cooling in the soaking step was low, the volume fraction of bainite was insufficient. Therefore, the balance of mechanical properties deteriorated.

In Example No. 125, since the holding temperature after stopping cooling in the soaking step was high and the holding time after stopping cooling was long, bainitic transformation progressed excessively, resulting in an excessive volume fraction of bainite. Therefore, the balance of mechanical properties deteriorated.

In Example No. 109, since the total amount of Si and Al was large, cracks occurred in the slab. Therefore, steps subsequent to the hot rolling could not be performed.

In Example 110, since the C content was low, the Ms point did not decrease significantly, and as a result, the volume fraction of residual austenite was small. In addition, the number proportion of residual austenite having an aspect ratio of 2.0 or more was small. Therefore, the balance of mechanical properties deteriorated.

In Example No. 111, since the total amount of Si and Al was small, carbon concentration in untransformed austenite was small. As a result, the volume fraction of residual austenite was small, and the number proportion of residual austenite having an aspect ratio 2.0 or more was small. Therefore, the balance of mechanical properties deteriorated.

In Example Nos. 112 and 131, since the Mn content was low, the Ms point did not decrease. As a result, the volume fractions of ferrite and pearlite were large, the volume fractions of residual austenite and tempered martensite were large, and the number proportion of residual austenite having an aspect ratio 2.0 or more was small. Therefore, the tensile strength was insufficient.

In Example No. 113, since the Mn content was high, cracks occurred in the steel sheet during the cold rolling step. Therefore, subsequent steps could not be performed.

In Example No. 114, since the C content was high, cracks occurred in the steel sheet during the cold rolling step. Therefore, subsequent steps could not be performed.

In Example No. 115, since the Si content was high, cracks occurred in the slab. Therefore, steps subsequent to the hot rolling could not be performed.

In Example No. 116, since the Al content was high, cracks occurred in the slab. Therefore, steps subsequent to the hot rolling could not be performed.

In Example Nos. 66, 70, 74, 75, 80, 85, 86, 89, 94, 98, 99, 100, 101, 103, 104, 106, 117, 118, 120, 122, 123, 124, 126, 127, 128, and 129, since the oxygen potential was high in the first annealing step, internal oxidation occurred in the vicinity of the surface layer of the steel sheet, and at the same time, decarburization progressed, resulting in softening. Therefore, the ratio of the Vickers hardness $Hv_{sur}$ at a depth position of 30 $\mu$m from the surface to the Vickers Hardness [Hv] at a 1/4 depth position of the sheet thickness from the surface decreased, and the bendability was improved, so that the Charpy absorbed energy was improved.

While the preferred embodiments and examples of the present invention have been described above, these embodiments and examples are merely examples within the scope of the gist of the present invention, and additions, omissions, substitutions, and other changes of the configuration can be made without departing from the gist of the present invention. That is, the present invention is not limited by the above description, but is limited only by the appended claims, and can be appropriately changed within the scope as a matter of course.

**Claims**

1. A steel sheet comprising, as a chemical composition, by mass%:

   C: 0.150% to 0.400%;
   Si: 0.01% to 2.50%;
   Mn: 1.50% to 3.50%;
   P: 0.050% or less;
   S: 0.0100% or less;
   Al: 0.001% to 1.500%;
   Si and Al: 0.50% to 3.00% in total;
   N: 0.0100% or less;
   O: 0.0100% or less;
   Ti: 0% to 0.200%;
   V: 0% to 1.00%;
   Nb: 0% to 0.100%;
   Cr: 0% to 2.00%;
   Ni: 0% to 1.00%;
   Cu: 0% to 1.00%;
   Co: 0% to 1.00%;
   Mo: 0% to 1.00%;
   W: 0% to 1.00%;
   B: 0% to 0.0100%;
   Sn: 0% to 1.00%;
   Sb: 0% to 1.00%;
   Ca: 0% to 0.0100%;
   Mg: 0% to 0.0100%;
   Ce: 0% to 0.0100%;
   Zr: 0% to 0.0100%;
   La: 0% to 0.0100%;
   Hf: 0% to 0.0100%;
   Bi: 0% to 0.0100%;
   REM other than Ce and La: 0% to 0.0100%; and
   a remainder of Fe and impurities,
   wherein a microstructure at a 1/4 depth position of a sheet thickness from a surface of the steel sheet contains, by volume fraction,

      ferrite: 0% to 50%,
      residual austenite: 6% to 30%,
      bainite: 5% to 60%,

tempered martensite: 5% to 50%,
fresh martensite: 0% to 10%, and
pearlite: 0% to 5%,

at the 1/4 depth position of the sheet thickness from the surface, a number proportion of the residual austenite having an aspect ratio of 2.0 or more to an entire residual austenite is 50% or more, and a number density of inclusions and precipitates having a grain size of 1 $\mu$m or more is 30 /mm$^2$ or less, and
at a 1/20 depth position of the sheet thickness from the surface, an average interval between Mn-concentrated portions in a direction perpendicular to a rolling direction is 300 $\mu$m or less, and a standard deviation of Mn concentrations in the residual austenite is 0.40% or less.

2. The steel sheet according to Claim 1,
wherein a ratio of a Vickers hardness Hv$_{sur}$ at a depth position of 30 $\mu$m from the surface to a Vickers hardness [Hv] at the 1/4 depth position of the sheet thickness from the surface satisfies Expression (1),

$$Hv_{sur}/[Hv] \leq 0.80 \quad (1).$$

3. The steel sheet according to Claim 1 or 2, further comprising:
a plating layer on the surface.

4. A method for manufacturing the steel sheet according to Claim 1, the method comprising:

a casting step of casting a molten steel having the chemical composition according to Claim 1 into a slab having a thickness of 200 to 300 mm;
a hot rolling step of performing hot rolling on the slab to obtain a hot-rolled steel sheet;
a coiling step of coiling the hot-rolled steel sheet in a temperature range of 25°C to 680°C;
a cold rolling step of performing cold rolling on the hot-rolled steel sheet after the coiling step at a rolling reduction of 20% or more to obtain a cold-rolled steel sheet;
a first annealing step of performing first annealing on the cold-rolled steel sheet;
a second annealing step of performing second annealing on the cold-rolled steel sheet after the first annealing step; and
a soaking step of holding the cold-rolled steel sheet after the second annealing step in a temperature range of 260°C to 450°C for 10 to 1000 seconds,
wherein, in the casting step, a solidification rate at a depth position of 10 mm from a surface of the molten steel is set to 100 to 1000 °C/min, a molten steel casting amount per unit time is set to 2.0 to 6.0 tons/min, and cooling is performed at an average cooling rate set to 4 °C/sec or higher between a liquidus temperature and a solidus temperature of a surface layer area at a depth position of 5 mm from the surface of the molten steel,
in the hot rolling step, an average heating rate of the slab between Ac1 and Ac1 + 30°C is 2 to 50 °C/min, and the hot rolling is performed after the slab is heated to 1200°C or higher for 20 minutes or longer,
in the first annealing step, an average heating rate between Ac1 and Ac1 + 30°C is 0.5 °C/min or higher, holding is performed at a highest heating temperature of Ac3 to 950°C for 1 second to 1000 seconds, an average cooling rate in a temperature range up to 650°C is 1 °C/sec or higher, and a cooling stop temperature is 25°C to 450°C, and
in the second annealing step, holding is performed at a highest heating temperature of Ac1 + 20°C or higher and lower than Ac3 for 1 second to 1000 seconds, and then cooling to 250°C or lower is performed.

5. A method for manufacturing the steel sheet according to Claim 1, the method comprising:

a casting step of casting a molten steel having the chemical composition according to Claim 1 into a slab having a thickness of 200 to 300 mm;
a hot rolling step of performing hot rolling on the slab to obtain a hot-rolled steel sheet;
a coiling step of coiling the hot-rolled steel sheet in a temperature range of 25°C to 450°C;
a cold rolling step of performing cold rolling on the hot-rolled steel sheet at a rolling reduction of 30% or less to obtain a cold-rolled steel sheet as necessary;
a first annealing step of performing first annealing on the hot-rolled steel sheet or the cold-rolled steel sheet; and
a soaking step of holding the hot-rolled steel sheet or the cold-rolled steel sheet after the first annealing step in a temperature range of 260°C to 450°C for 10 to 1000 seconds,
wherein, in the casting step, a solidification rate at a depth position of 10 mm from a surface of the molten steel is set to 100 to 1000 °C/min, a molten steel casting amount per unit time is set to 2.0 to 6.0 tons/min, and cooling is performed at an average cooling rate set to 4 °C/sec or higher between a liquidus temperature and a solidus temperature of a surface layer area at a depth position of 5 mm from the surface of the molten steel,

in the hot rolling step, an average heating rate of the slab between Ac1 and Ac1 + 30°C is 2 to 50 °C/min, the hot rolling is performed after the slab is heated to 1200°C or higher for 20 minutes or longer, and after completing finish rolling at a temperature of 850°C or higher, cooling to 600°C is performed at an average cooling rate of 10 °C/sec or higher, and

in the first annealing step, holding is performed at a highest heating temperature of Ac1 + 20°C or higher and lower than Ac3 for 1 second to 1000 seconds, and then cooling to 250°C or lower is performed.

6. The method for manufacturing the steel sheet according to Claim 4,
wherein, in at least one of the first annealing step and the second annealing step, when the holding at the highest heating temperature is performed for 1 second to 1000 seconds, an atmosphere $\log(PH_2O/PH_2)$ in a heating furnace is $-1.10 \leq \log(PH_2O/PH_2) \leq -0.07$.

7. The method for manufacturing the steel sheet according to Claim 5,
wherein, in the first annealing step, when the holding at the highest heating temperature is performed for 1 second to 1000 seconds, an atmosphere $\log(PH_2O/PH_2)$ in a heating furnace is $-1.10 \leq \log(PH_2O/PH_2) \leq -0.07$.

8. The method for manufacturing the steel sheet according to Claim 4 or 6, further comprising:
a hot-dip galvanizing step of immersing the cold-rolled steel sheet in a hot-dip galvanizing bath to obtain a hot-dip galvanized steel sheet during the cooling from the highest heating temperature to 250°C or lower in the second annealing step before the soaking step.

9. The method for manufacturing the steel sheet according to Claim 5 or 7, further comprising:
a hot-dip galvanizing step of immersing the hot-rolled steel sheet or the cold-rolled steel sheet in a hot-dip galvanizing bath to obtain a hot-dip galvanized steel sheet during the cooling from the highest heating temperature to 250°C or lower in the first annealing step before the soaking step.

10. The method for manufacturing the steel sheet according to Claim 4 or 6, further comprising:
a hot-dip galvanizing step of immersing the cold-rolled steel sheet after the soaking step in a hot-dip galvanizing bath to obtain a hot-dip galvanized steel sheet.

11. The method for manufacturing the steel sheet according to Claim 5 or 7, further comprising:
a hot-dip galvanizing step of immersing the hot-rolled steel sheet or the cold-rolled steel sheet after the soaking step in a hot-dip galvanizing bath to obtain a hot-dip galvanized steel sheet.

## INTERNATIONAL SEARCH REPORT

International application No.

**PCT/JP2021/038323**

### A. CLASSIFICATION OF SUBJECT MATTER

*C21D 8/02*(2006.01)i; *C21D 9/46*(2006.01)i; *C22C 38/00*(2006.01)i; *C22C 38/60*(2006.01)i; *B22D 11/00*(2006.01)i
FI:   C22C38/00 301S; C21D9/46 J; C21D9/46 G; C22C38/00 301T; C22C38/00 301A; C21D8/02 A; C22C38/60;
      B22D11/00 A; C22C38/00 301W; C21D9/46 T

According to International Patent Classification (IPC) or to both national classification and IPC

### B. FIELDS SEARCHED

Minimum documentation searched (classification system followed by classification symbols)

C21D8/02; C21D9/46; C22C38/00-C22C38/60; B22D11/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2018/055687 A1 (NIPPON STEEL & SUMITOMO METAL CORP.) 29 March 2018 (2018-03-29) entire text, all drawings | 1-11 |
| A | WO 2015/151419 A1 (JFE STEEL CORP.) 08 October 2015 (2015-10-08) entire text | 1-11 |
| A | WO 2013/047821 A1 (NIPPON STEEL & SUMITOMO METAL CORP.) 04 April 2013 (2013-04-04) entire text | 1-11 |
| A | JP 2010-121176 A (SUMITOMO METAL INDUSTRIES, LTD.) 03 June 2010 (2010-06-03) entire text, all drawings | 1-11 |
| A | JP 2014-51683 A (NIPPON STEEL & SUMITOMO METAL CORP.) 20 March 2014 (2014-03-20) entire text | 1-11 |

| ✓ | Further documents are listed in the continuation of Box C. | ✓ | See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 December 2021** | **14 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2021/038323** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2020/128811 A1 (ARCELORMITTAL) 25 June 2020 (2020-06-25) entire text | 1-11 |

Form PCT/ISA/210 (second sheet) (January 2015)

<table>
<tr><td colspan="2" align="center">**INTERNATIONAL SEARCH REPORT**<br>**Information on patent family members**</td><td colspan="2">International application No.<br>**PCT/JP2021/038323**</td></tr>
</table>

| Patent document<br>cited in search report | Publication date<br>(day/month/year) | Patent family member(s) | Publication date<br>(day/month/year) |
|---|---|---|---|
| WO 2018/055687 A1 | 29 March 2018 | US 2019/0211427 A1<br>entire text, all drawings<br>EP 3517643 A1<br>KR 10-2019-0042066 A<br>CN 109790601 A<br>BR 112019004843 A2<br>MX 2019003125 A | |
| WO 2015/151419 A1 | 08 October 2015 | US 2017/0145534 A1<br>entire text<br>EP 3128027 A1<br>CN 106170574 A | |
| WO 2013/047821 A1 | 04 April 2013 | US 2014/0234660 A1<br>entire text<br>EP 2762582 A1<br>TW 201329251 A<br>CA 2850340 A1<br>CN 103842541 A<br>KR 10-2014-0052072 A<br>MX 2014003718 A<br>RU 2014117645 A<br>BR 112014007498 A2<br>ZA 201402352 B<br>PL 2762582 T3<br>ES 2725803 T3 | |
| JP 2010-121176 A | 03 June 2010 | (Family: none) | |
| JP 2014-51683 A | 20 March 2014 | (Family: none) | |
| WO 2020/128811 A1 | 25 June 2020 | EP 3899067 A1<br>entire text<br>CA 3115028 A1<br>CN 113166828 A<br>KR 10-2021-0072070 A<br>BR 112021006139 A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020174217 A
- WO 2013051238 A
- JP 2006104532 A
- WO 2019186989 A
- JP 2013185196 A